(19) Europäisches Patentamt

European Patent Office

Office européen des brevets

(11) **EP 0 618 737 B1**

(12) **EUROPEAN PATENT SPECIFICATION**

(45) Date of publication and mention
of the grant of the patent:
**17.05.2000 Bulletin 2000/20**

(51) Int. Cl.[7]: **H04N 9/04**

(21) Application number: **94105148.4**

(22) Date of filing: **31.03.1994**

(54) **Neural network video image processor**

Videobildverarbeitungssystem mit neuronalem Netzwerk

Processeur d'images vidéo à réseau neuronal

(84) Designated Contracting States:
**DE GB NL**

(30) Priority: **31.03.1993 US 40407**
**10.09.1993 US 119873**

(43) Date of publication of application:
**05.10.1994 Bulletin 1994/40**

(73) Proprietor:
**MATSUSHITA ELECTRIC INDUSTRIAL CO., LTD.
Kadoma-shi, Osaka 571-8501 (JP)**

(72) Inventor: **Zortea Anthony
Pennsylvania 18947 (US)**

(74) Representative:
**Marx, Lothar, Dr. et al
Patentanwälte Schwabe, Sandmair, Marx
Stuntzstrasse 16
81677 München (DE)**

(56) References cited:
**EP-A- 0 384 689          WO-A-93/03443
US-A- 4 803 736          US-A- 5 025 282
US-A- 5 161 014**

• **IEEE TRANSACTIONS ON CONSUMER
ELECTRONICS, FEB. 1992, USA, vol. 38, no. 1,
ISSN 0098-3063, pages 25-29, LU C -C ET AL 'A
neural network based image compression
system'**

**Description**

BACKGROUND OF THE INVENTION

The present invention concerns apparatus and a method for processing video signals to implement a plurality of signal processing functions in a single operation, and in particular to apparatus which uses a neural network to perform these functions.

In many signal processing systems, functions are applied to data sequentially. That is to say one function is applied to the input data and the output values produced by that function are applied as the input values to the next function. This type of processing is commonly referred to as pipeline processing.

An exemplary system which employs pipeline processing is a video camera. One such camera is described in an article by K.A. Parulski et al. entitled "A Digital Color CCD Imaging System Using Custom VLSI Circuits," IEEE Transactions on Consumer Electronics, Vol. 35, No. 3, pp. 382-389, August, 1989.

The camera described in this paper employs a CCD sensor which collects samples representing successive video images. These samples are then digitized and processed by a color filter array (CFA) signal processor and a red, green, blue (RGB) signal post-processor. The CFA processor generates, from the single image samples provided by the CCD device, a complete set of Red (R), Green (G) and Blue (B) samples. In addition, the CFA processor performs color balance corrections on the RGB signals. The RGB post-processor performs black-level adjustments, gamma correction and aperture correction.

As described in the referenced article, the circuitry used to perform these processing functions is implemented in two VLSI integrated circuits. These circuits represent a relatively large amount of special purpose circuitry produced only after an expensive development cycle.

In addition to requiring a relatively large amount of special purpose circuitry, systems such as that shown in the referenced paper introduce a delay in their processing paths due to the pipelining of the signal processing operations. Parallel signal processing paths may exist in the system, for example, if audio information from the observed scene were being processed in parallel with the video information. The delays caused by the pipeline processing of the video information are desirably compensated for in the audio signal processing circuitry.

While the delays for the referenced video camera processing circuitry are relatively small, other video signal processing apparatus may employ one or more frame delay elements in its processing circuitry. These elements introduce more substantial delays for which compensation is more difficult.

Furthermore, in systems of the type described in the referenced article, there is an inherent conflict between the precision of the design and its cost, as reflected by its complexity. Many of the processing steps performed in a video camera are modeled as relatively simple mathematical functions, even though these functions do not strictly conform to the desired processing steps. These functional models are used only because it would not be cost effective to implement the desired processing steps according to a more rigorous model or to implement multiple independent functions as a single model.

An apparatus including a neural network for processing an input signal according to a linear function is disclosed in WO 93/03443, published in Japanese, corresponding to EP-A-0551524.

SUMMARY OF THE INVENTION

The present invention, which in its broadest aspects is defined in claims 1 and 11, is embodied in apparatus and a method which utilizes a neural network to perform a group of independent non-linear signal processing functions as a single, combined function. The neural network includes a plurality of input processors which receive the signals to be processed. The network also includes one or more layers of hidden processors and a layer of output processors. The output processors provide the processed output signals.

According to one aspect of the invention, the neural network is trained to implement a first function of the group and then is retrained for each other function in the group which is to be combined with the initial function.

According to yet another aspect of the invention, a plurality of sets of weighting functions are defined for the neural network, each set corresponding to a respectively different set of input value ranges for the control parameters.

According to another aspect of the invention, a plurality of sets of weighting factors are defined for the neural network, each set corresponding to a respectively different defined set of control parameters.

According to another aspect of the invention, weighting factors for control parameters interstitial to defined sets of parameters are determined using an on-line training algorithm which is based on the defined parameter sets.

BRIEF DESCRIPTION OF THE DRAWINGS

Figure 1 (prior art) is a block diagram of an exemplary pipeline processing system.

Figure 2 is a block diagram which illustrates how the pipeline processing system of Figure 1 may be implemented using a neural network.

Figure 3 (prior art) is a block diagram of an exemplary video signal processing system which may be used in a video camera.

Figure 4 is a block diagram of a video camera signal processing system which includes an embodiment of the present invention.

Figure 4a is a block diagram of a video camera signal processing system which includes an alternative and more general embodiment of the present invention.

Figure 5 is a block diagram of a neural network suitable for use in the video camera system shown in Figure 4.

Figure 6 is a block diagram of an exemplary input layer processor suitable for use in the neural network shown in Figure 5.

Figure 6a is a schematic diagram of an exemplary analog processor which may be used as one of the input layer, hidden layer or output layer processors of the network shown in Figure 5.

Figure 7 is a block diagram of a hidden layer processor suitable for use in the neural network shown in Figure 5.

Figure 8 is a block diagram of an output layer processor suitable for use in the neural network shown in Figure 5.

Figure 9 is a flowchart diagram which is useful for describing the programing of the neural networks shown in Figures 4 and 4a.

Figure 10 is a flowchart diagram which is useful for describing the method by which the neural network is trained using the generated patterns, as shown in one of the steps of the flowchart diagram of Figure 9.

Figure 11 is a graph of input signal values versus output signal values which illustrates the performance of the system shown in Figure 4a as compared to an ideal system.

Figure 12 is a block diagram which illustrates how the pipeline processing system of Figure 1 may be implemented using a neural network.

Figure 13 (prior art) is a block diagram of an exemplary video signal processing system which may be used in a video camera.

Figure 14a is a block diagram of a video camera signal processing system which includes a first exemplary embodiment of the present invention including a training unit.

Figure 14b is a block diagram of a video camera signal processing system which includes a second exemplary embodiment of the present invention including a modified training unit.

Figure 15a is a nodal diagram of a neural network suitable for use in the present invention.

Figure 15b is a functional block diagram of an exemplary hardware implementation of Fig. 15a.

Figure 16 is a block diagram of an exemplary input layer node suitable for use in the neural network shown in Figure 15a.

Figure 17 a block diagram of a hidden layer node suitable for use in the neural network shown in Figure 15a.

Figure 18 is a block diagram of an output layer node suitable for use in the neural network shown in Figure 15a.

Figures 19a and 19b are graphs illustrating the timing of off-line and on-line network processing, respectively.

Figures 20a, 20b, and 20c are graphs comparing the results obtained by the neural network of the present invention with a conventional process; and

Figure 21 shows a flowchart illustrating a suitable on-line training technique employed by the exemplary embodiment.

DETAILED DESCRIPTION

Overview

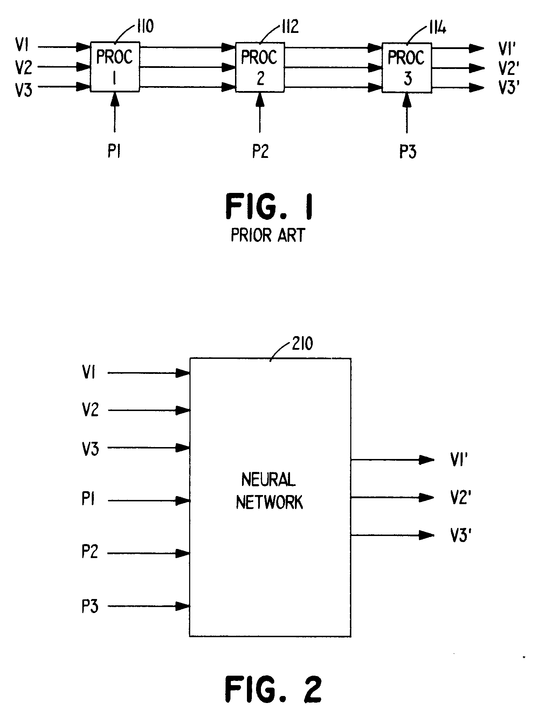

Figure 1 shows a typical pipeline signal processing system. In this system, three input signals, V1, V2, and V3 are processed sequentially by processors 110, 112 and 114 to produce three output signals V1', V2' and V3'. In this example, the processors 110, 112 and 114 are controlled by parameters P1, P2 and P3 respectively. In the system shown in Figure 1, each of the processors 110, 112 and 114 is independent; each performs a well-defined operation on its input data values to produce its output data values.

One of the underlying ideas of the subject invention is to replace a system such as that shown in Figure 1 by an otherwise equivalent system, such as that shown in Figure 2. In Figure 2 the neural network 210 is coupled to receive both the data signal inputs V1, V2 and V3 and the parameter input signals P1, P2 and P3 as inputs. The neural network 210 produces the output signals V1', V2' and V3' as in Figure 1.

The system shown in Figure 2 has many advantages over that shown in Figure 1. First, all three processes are implemented using a single set of hardware. This reduces development and design time and, depending on the relative complexity of the various systems, may also reduce cost. Second, a single failure in one of the processors 110, 112 and 114 may render the entire system shown in Figure 1 inoperative whereas a single failure in the system shown in Figure 2 may leave many of the output values unaffected for a given set of input values. Third, if each of the processes performed by the processors 110, 112 and 114 is highly subjective or is poorly modeled by conventional single processing techniques, there may be advantages in implementing the processes on a neural network since the neural network allows the function to be implemented at a higher level of the abstraction; that is to say, not confined to any overly simplified mathematical model.

In the materials that follow, the video signal processing system is described in the context of a video camera. It is contemplated, however, that the described invention may have more general application in video signal processing. It is also contemplated that the invention may have general application in non-video signal Processing where the processing steps are performed sequentially and the actual processes performed are more subjective than objective.

Detailed Description of the Exemplary Embodiments

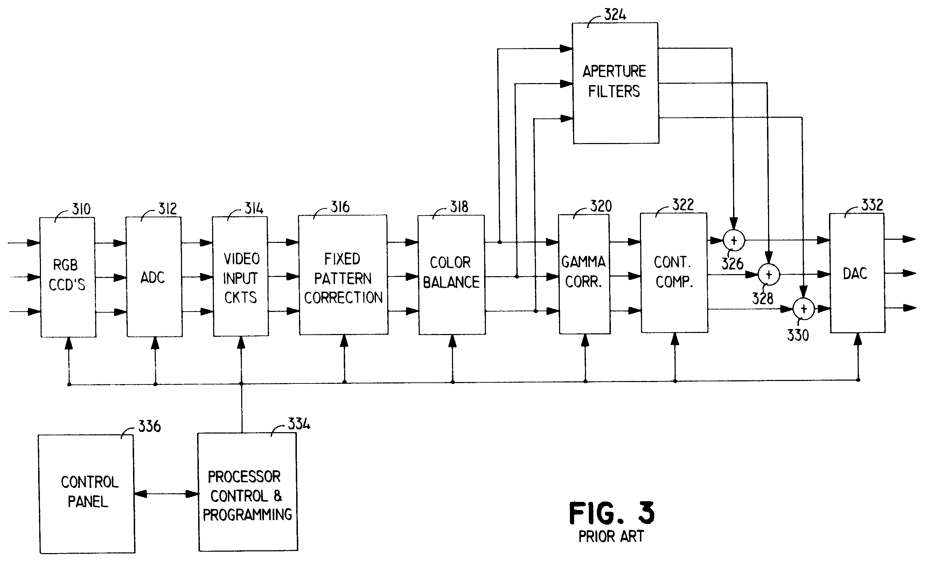

Figure 3 is a block diagram of an exemplary digital video camera system. In the Figure, light from a scene is focused onto separate red, green and blue Charge Coupled Devices (CCD) imagers 310. The CCD imagers 310 produce analog sampled data signals representing, respectively, the red, green and blue color components of the scene, as an image of the scene is focused on the CCD imager. These signals are applied to an Analog to Digital Converter (ADC) 312 which converts the simple data analog signals to digital sample data signals.

The digital signals produced by the ADC 312 are applied to video input circuits 314. In this exemplary circuit, the video input circuits are latches which are used to synchronize the digital values provided by the ADC 312 to the remainder of the camera signal processing circuitry.

The first signal processing step after analog-to-digital conversion is the fixed pattern correction step, which is performed by the processor 316. This step may, for example, store an image corresponding to the dark current provided by the CCD imagers 310 (i.e. the charge values produced by the CCD in the absence of light) and subtract this dark current image from the image signals provided by the video input circuit 314.

The output signals produced by the fixed pattern correction circuitry 316 are applied to a color-balance processor 318. The processor 318 adjusts relative amplification factors for each of the red, green and blue signals so that the brightest object in the camera's field of view will appear white on the reproduced image.

The color balance calibration is generally performed only once, during the initial camera set up. The amplification or gain factors developed in this calibration step, however, are applied to the red, green and blue signals provided by the pattern correction circuitry 316 during the remainder of normal imaging operation.

The output signals provided by the color balance processor 318 are applied in parallel to a set of aperture filters 324 and to a gamma correction processor 320. The gamma correction processor 320 applies a function $\Gamma(x)$ to the sample values x. This function is shown in equation (1).

$$\Gamma(x) = x^{\gamma} \tag{1}$$

The output values produced by the gamma correction processor 320 are applied to a contrast compressor 322. The contrast compressor 322 applies a function CC(x), where x represents the individual R, G and B signals, as shown in equation (2).

$$CC(x) = \frac{(MAX(R,G,B))^{cont}}{MAX(R,G,B)} x \tag{2}$$

The aperture filters 324 extract and amplify high frequency components from some combination of the R, G and B signals and apply these amplified high frequency components to each of the red, green and blue signals provided by the contrast compression circuitry 322. The aperture correction signal is combined with the red, green and blue signals by the adders 326, 328 and 330 respectively. These combined signals are then converted to analog signals by a digital to analog converter (DAC) 332.

The video input circuits 314, fixed pattern correction circuitry 316, color balance processor 318, gamma correction processor 320, contrast compression processor 322, and aperture filters 324 are controlled by the process control programming circuitry 334. This circuitry receives information from, and provides status information to a control panel 336. In addition to controlling the above processor control and programming circuitry 334 also generates clock signals and other timing signals for the CCD imagers 310, the ADC 312 and the DAC 332.

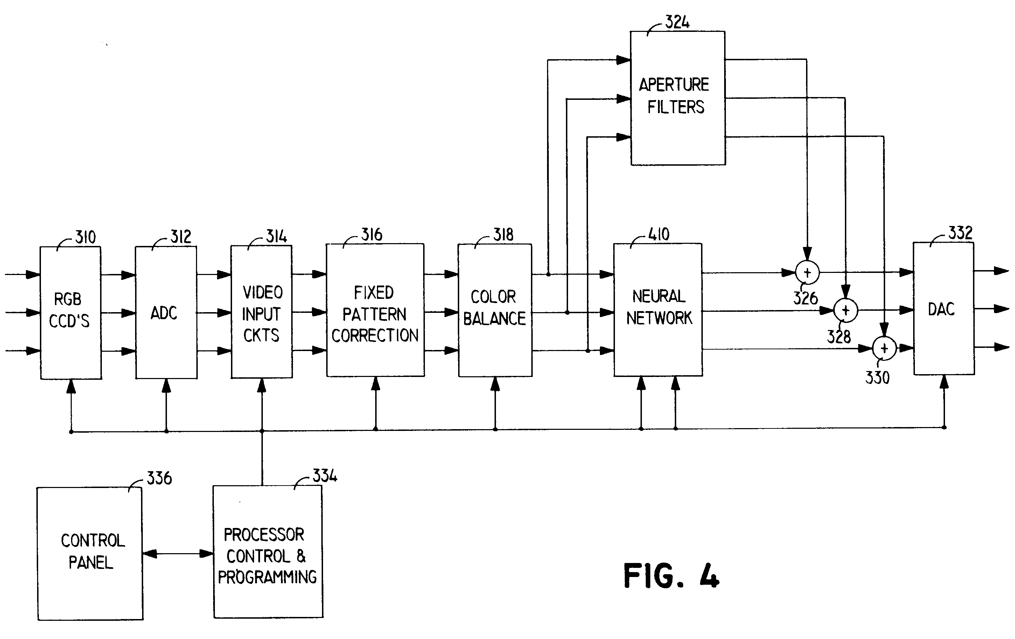

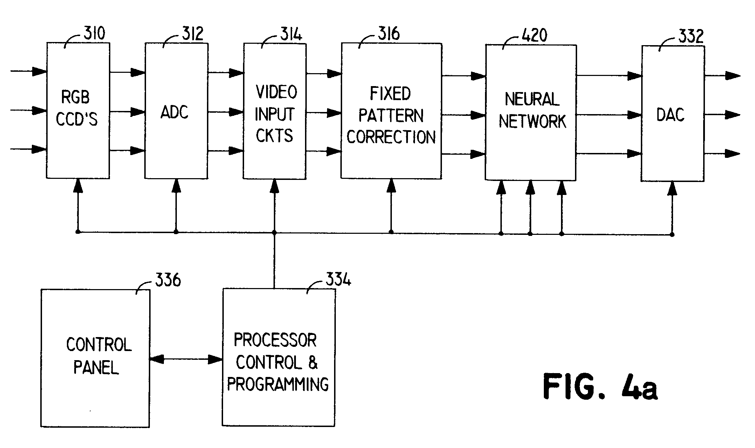

Figure 4 is a block diagram of an exemplary video camera which includes an embodiment of the present invention. This camera is the same as that shown in Figure 3 except that the gamma correction processor 320 and contract compression processor 322 are replaced by a single neural network 410.

Figure 4a shows another video camera configuration which is the same as that shown in Figure 3 except that a neural network 420 replaces the color balance processor 318, gamma correction processor 320, contrast compression processor 322, aperture filters 324 and adders 326, 328 and 330.

Disregarding, for the moment, the complexity of the neural networks 410 and 420, the circuitry shown in Figures 4 and 4a is simpler than the circuits in Figure 3 simply because it includes fewer components. In addition, as described below, the engineering effort needed to produce acceptable signal processing from the circuits shown in Figures 4 and 4a may be considerably less than that needed to produce the same level of performance from the circuits shown in Figure 3.

Even when the complexity of the neural network is considered, the circuitry shown in Figures 4 and 4a may be less costly than that shown in Figure 3 since the neural networks 410 and 420, or the processing elements which make up the networks, may be off-the-shelf items and, thus, may benefit from volume discounts. In addition, the neural network may be designed to use multiple identical processing elements.

For the sake of simplicity only the embodiment of the invention shown in Figure 4 is described below. This embodiment, however, is described with sufficient guidance to enable one ordinary skill in the art to implement the circuit shown in Figure 4a.

In Figure 4 the gamma correction and contrast compression functions are combined and performed by the neural network 410. The combination of these two functions is highly nonlinear. The gamma correction function, defined by equation (1), and the contrast compression function, defined by equation (2), are combined as shown in equations (3), (4) and (5) to produce the respective signals r', g' and b' from the input color signals r, g and b and the control parameters $\gamma$ and cont.

$$r' = \left( \frac{(MAX(r,g,b))^{cont}}{MAX(r,g,b)} r \right)^{\gamma} \tag{3}$$

$$' = \left( \frac{(MAX(r,g,b))^{cont}}{MAX(r,g,b)} g \right) \tag{4}$$

$$b' = \left( \frac{(MAX(r,g,b))^{cont}}{MAX(r,g,b)} b \right)^{\gamma} \tag{5}$$

In these equations, the signals r', g' and b' are the result of performing gamma correction and contrast compression on the respective r, g and b input signals. This combined process is very nonlinear since it involves multiple exponentials and maximums. In addition one of the output color output signals can change if the corresponding input color signal is the same but one of the other input color signals has changed.

Furthermore, the equations do not lend themselves to being implemented easily either in analog or digital circuitry. The equations (3), (4) and (5) are too complex to be effectively implemented using conventional analog signal processing circuitry. While it may be simpler to implement the equations using a programmed digital processor, the complexity of the operations performed would require either excessive signal processing delays or an overly complex processor. Finally, if the function is implemented as a large look up table (LUT) the amount of memory needed to hold the LUT even for eight-bit input values would be so large ($2^{(8*5)} = 2^{40} \approx 1.1 * 10^{12}$) as to make the device impractical.

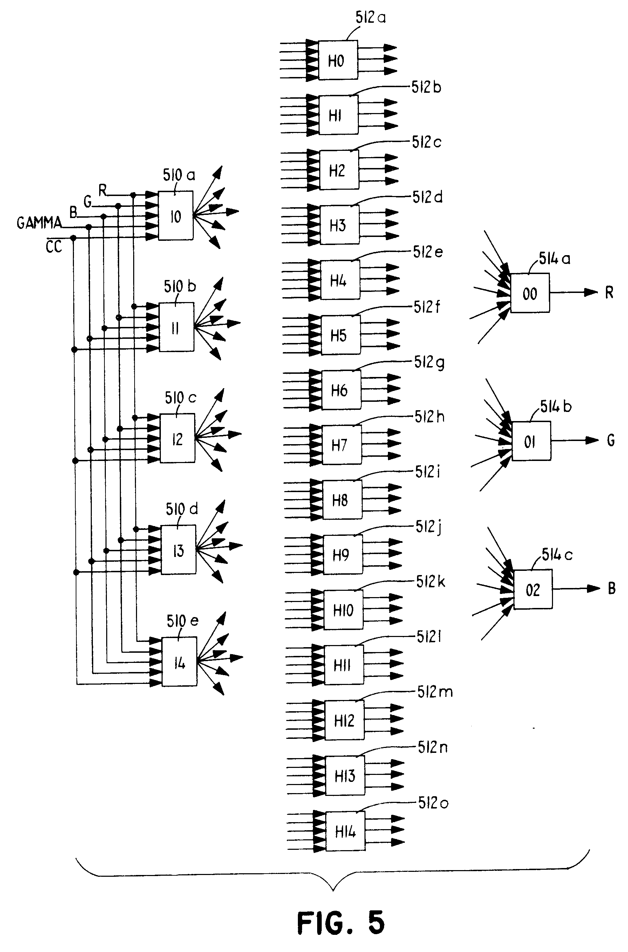

Figure 5 is a block diagram of a neural network which is suitable for use as the network 410. This network includes three layers of processors, input processors 510a through 510e, hidden processors 512a through 512o and output processors 514a through 514c. Each of the input processors, for example 510a, receives all of the input signals, the color signals R, G and B and the control signals $\gamma$ and cont. Each input processor in turn provides its output signal to all of the hidden processors 512a through 512o. Each hidden processor, for example 512a, produces three output signals, one of which is applied to output processor 514a another, to 514b and the third, to output processor 514c. The output processors 514a, 514b and 514c produce the respective processed color signals r', g' and b'.

Since the aperture correction function is a spatial filtering operation, it may be desirable for the neural network 420 to include circuitry which stores multiple lines of video samples so that samples which are displayed on either side of the one sample which is being processed as well as samples which are displayed above and below the one sample are applied as input values to the neural network. Accordingly, the neural network 420 may have more input terminals than the network 410. In addition, due to the increased complexity of the multiple functions being emulated by the network 420 over those emulated by the network 410, it may be desirable to use a larger number of input, and hidden processors in the network 420 than are used in the network 410. Instead of using only one layer of hidden processors, it may also be desirable to expand the network to use multiple hidden layers.

Referring again to Figure 5, each processor in the network calculates successive weighted sums of successive values applied to its input ports and then transforms the weighted sums through a sigmoidal transfer function to produce its output value. For the input and hidden processors, these output values are applied to all of the processors in the next stage. For the output processors, these output values are the signals r', g' or b'.

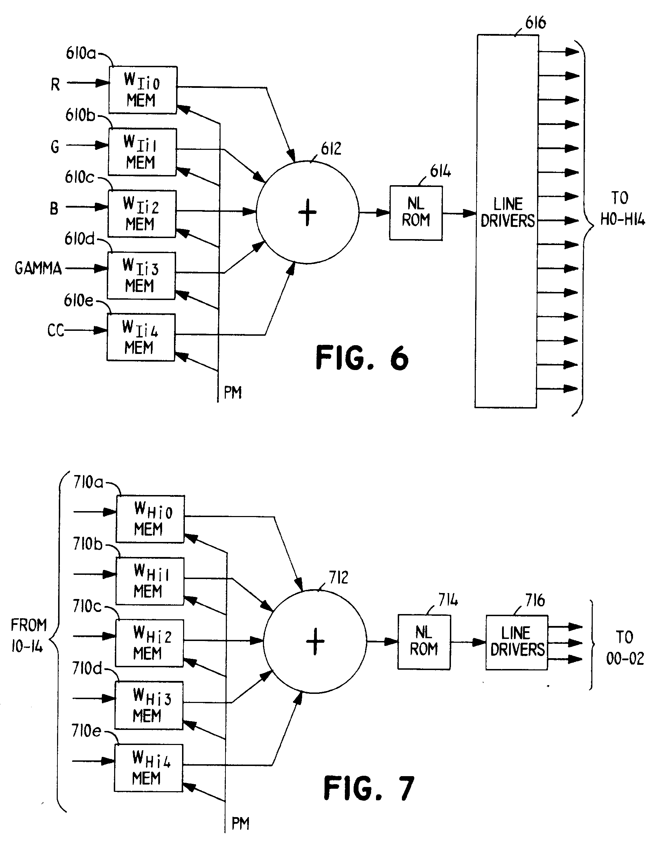

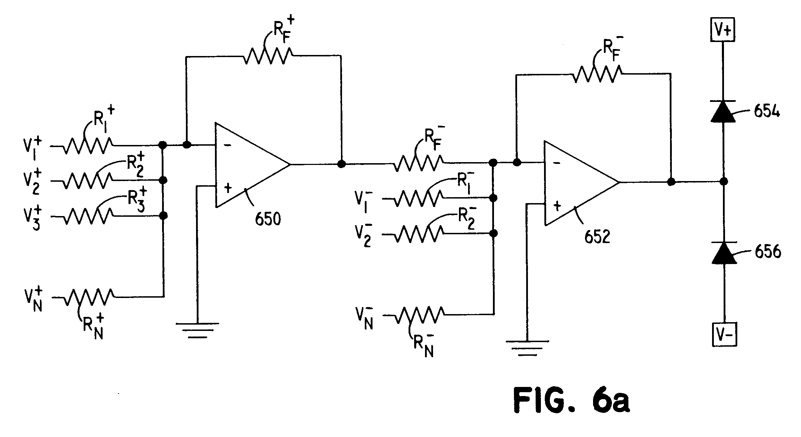

Figure 6 is a block diagram of circuitry suitable for use as one of the input processors, for example, processor 510a. In Figure 6, samples of the three color signals r, g and b and samples of the control signals $\gamma$ and cont are applied to each of the weighting circuits 610a, 610b, 610c, 610d and 610e. The respective weighting factors applied by these circuits are $W_{Ii0}$, $W_{Ii1}$, $W_{Ii2}$, $W_{Ii3}$ and $W_{Ii4}$, where the subscript I indicates that these are weighting factors from an input processor and the subscript i identifies the particular input processor. These weighting factors are programmable via a programing bus PM. In the exemplary embodiment of the invention each of the circuits 610a through 610e may be a dedicated multiplier circuit in which the programmable weighting factor is applied to the multiplier input port and the respective input signal (r, g, b, $\gamma$ or cont) is applied to the multiplicand input port.

Alternatively, the circuits 610a through 610e may be implemented as respective memories (not shown) each programmed with a set of values that implement the multiplication by the weighting factor. If, for example, the color signals are eight-bit signals, each of the memories 610a through 610e would hold 256 values representing each possible result that could be obtained from multiplying the input signal (applied to the address input port) by the programmed weighting factor.

The weighted output samples provided by each of the weighting circuits 610a through 610e are applied to a summing circuit 612. In a digital embodiment of the invention, the summing circuit 612 may be implemented as a tree of adders.

The output samples provided by the summing circuit 612 are applied to a circuit 614 which implements a nonlinear transfer function. In the exemplary embodiment of the invention, the circuit 614 is a Read-Only Memory (ROM) which is programmed to transform the input value supplied as addresses to output values substantially equal to the input values as modified by the transfer function. In the exemplary embodiment of the invention the transfer function implemented by the circuitry 614 is a sigmoidal function $g_\beta(x)$ having the form shown in equation (6).

$$g_\beta(x) = \frac{1}{1 + e^{-\beta x}} \tag{6}$$

In this embodiment of the invention, the function $g_\beta(x)$ is implemented with $\beta$ having a value of 1. In the materials that follow, this function is referred to as simply $g(x)$.

The output signal of the nonlinear circuit 614 is applied to a line driver circuit 616 which generates 15 copies of the output signal for application to each of the hidden processors 512a through 512o, shown in Figure 5.

Figure 6a shows an exemplary analog implementation of the weighting circuits one of the processors shown in Figure 5. As shown in this figure, the input potentials $V_1^+, V_2^+, \ldots V_N^+$ and $V_1^-, V_2^-, \ldots V_N^-$ are summed in respective resistor networks ($R_1^+$ through $R_N^+$ and $R_1^-$ through $R_N^-$) and applied to respective summing amplifiers, 650 and 652. The weighting factor applied to each input signal is the ratio of the appropriate feedback resistor ($R_f^+$ and $R_f^-$) to the input resistor. The output signal, $V_{out}$, produced by the circuit shown in Figure 6a may be represented by equation (7).

$$V_{out} = g_o \left( \sum_{i=1}^{N} \frac{R_f^+}{R_i} V_i^+ - \sum_{i=1}^{N} \frac{R_f^-}{R_i} V_i^- \right) \qquad (7)$$

where $V_i^+$ represents an input signal which is to receive a positive weight, $R_i^+$; $V_i^-$ represents an input signal which is to receive a negative weight, $R_i^-$; and $g_o$ represents the non-linear function implemented by the two diodes 654 and 656.

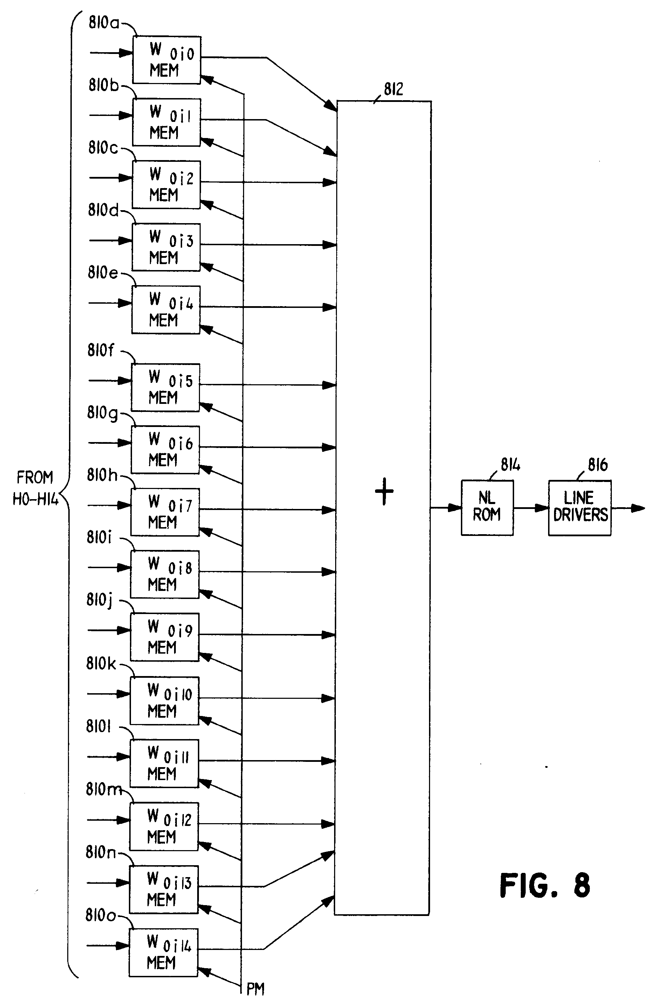

An exemplary hidden processor is shown in Figure 7. This circuit is the same as the circuitry shown in Figure 6 except that each of the weighting circuits 710a through 710e receives an input signal from a respectively different one of the input processors 510a through 510e, shown in Figure 5. Each of the weighting factors, $W_{Hi0}$ through $W_{Hi4}$, held by the respective weighting circuits 710a through 710e is independently programmable via the programming bus PM. In the notation for these weighting factors, the subscript H indicates that these are hidden processor factors and the Subscript i designates a particular hidden processor.

In addition, the circuit shown in Figure 7 differs from that shown in Figure 6 because the line driver 716 of the hidden processor generates only three copies of the output signal. These three output signals are applied to respectively different ones of the output processors 514a, 514b and 514c shown in Figure 5.

Figure 8 is a block diagram of an output processor suitable for use as one of the processors 514a, 514b and 514c. As shown in the Figure, the output processor has a similar structure to the input processor and the hidden processor. The output processor, however, has 15 input signals and, so, 15 weighting circuits, 810a through 810o. Each of the weighting factors, $W_{Oi0}$ through $W_{Oi14}$, implemented by the respective weighting circuits 810a through 810o is independently programmable via the programming bus PM. In the notation for these weighting factors, the subscript O indicates that these are output processor factors and the subscript i designates a particular output processor. The weighted output values provided by the weighting circuits 810a through 810o are summed in a summing circuit 812.

The output signal of the summing circuit 812 is applied to a nonlinear ROM 814 which may be identical to the nonlinear ROM's 614 and 714 shown in Figures 6 and 7 respectively. The output signal provided by the nonlinear ROM 814 is applied to a line driver 816 which generates an output signal having sufficient strength to drive the circuitry to which the output processor 514a, 514b or 514c are coupled.

Referring to Figure 4, the neural network 410 is programmed to implement the transfer functions of the gamma correction and contrast compression algorithms by programming the values of the weighting factors in each of the input, hidden and output processors. These weighting factors are programmed using a learning algorithm based on a set of known input/output signal combinations. This algorithm determines values of the weighting factors which produce an acceptable approximation of the combined gamma correction and contrast compression transfer function, as defined by equations (3), (4) and (5). One method by which these weighting values are updated, commonly referred to as back-propagation of error, is described below.

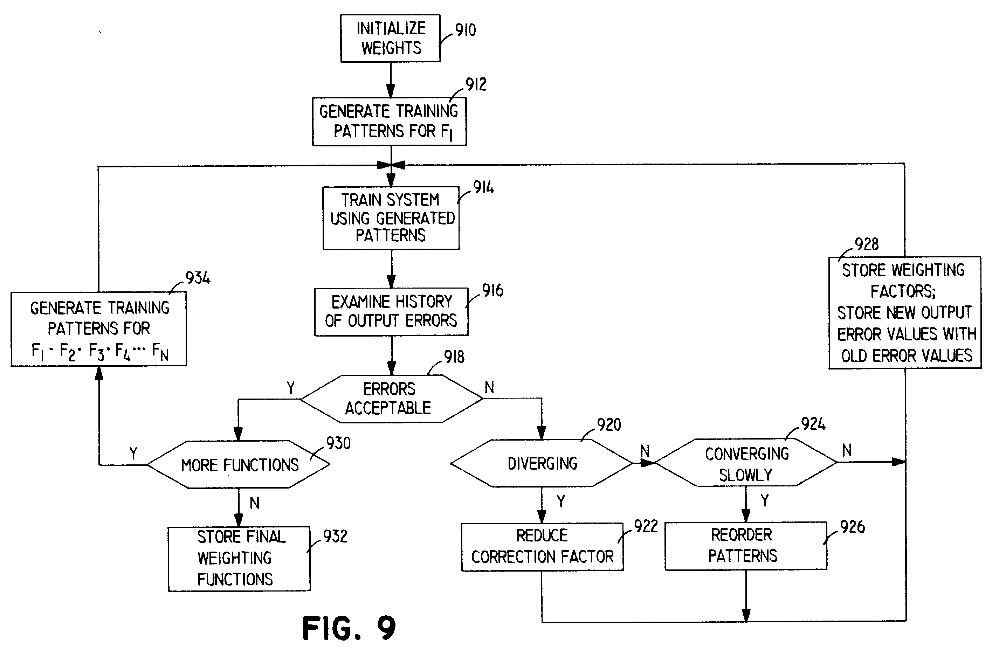

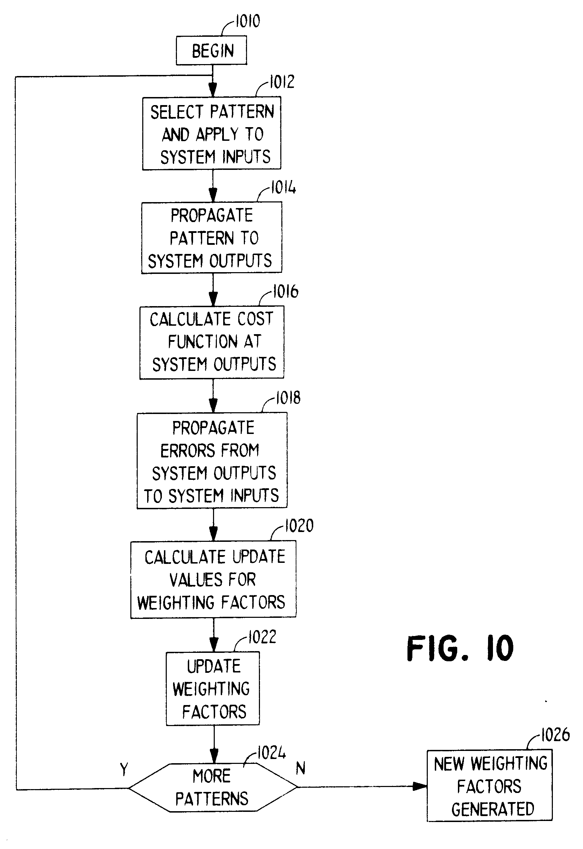

Figures 9 and 10 are flow chart diagrams which illustrate the method of updating the weighting values which is used in the exemplary embodiment of the invention. In the exemplary embodiment of the invention, this algorithm is implemented on a general purpose computer on which the neural network 410 is simulated.

At the first step of this method, step 910 of Figure 9, each of the weighting values in each of the input, hidden and output processors is set to an Initial value Ideally these initial values are relatively small random values which are assigned to the different weighting circuits. These initial values represent a starting point in the search for the best set of weighting values which will implement the desired function.

The next step in the process, step 912, generates a set of training patterns for function $F_1$. In the exemplary embodiment of the invention function $F_1$ may be, for example, the gamma correction function of equation (1) such as may be implemented by the gamma correction processor 320 of Figure 3.

To produce the test patterns, the program generates multiple sets of random input values of r, g, b and $\gamma$ and applies these values to the gamma equation (1) to obtain the corresponding output values representing the gamma corrected r, g and b color signals. Each set of input values and its corresponding output values forms one training pattern

for function $F_1$. When a sufficient number of different patterns have been generated control passes from step 912 to step 914 in which the system is trained using the generated patterns. As described below, in the exemplary embodiment of the invention, the neural network will be trained to implement the transfer function that was used to generate the training patterns by repeatedly applying the patterns to the simulated network. Step 914 represents only one application of the training patterns.

The process performed by step 914 is illustrated in more detail in Figure 10. After the process has been initiated, at step 1010, control shifts to step 1012 where a pattern is selected and applied to the system inputs. In this instance, since the neural network is being simulated on the computer which is determining values for the weighting factors, the system inputs are actually simulated input terminals of the simulated neural network. The values applied to the simulated input terminals at any given time are the randomly determined values for r, g, b and $\gamma$ from the test patterns produced in step 912, shown in Figure 9.

After the test input values have been applied in step 1012, they are propagated through the simulated neural network to the simulated output terminals at step 1014. In this step, the Simulated neural network, using whatever weighting factors have been currently assigned, processes the input signal values to produce corresponding output signal values.

At step 1016, these propagated output values are compared to the output values from the corresponding test patterns. Each of these comparisons produces an error value representing a difference between the output value produced by the neural network and the precalculated output value for the applied input values. It is contemplated that the error value or "cost function" may be calculated in a number of ways. One way would be to calculate the absolute difference between the actual output signal and the desired output signal. Using this method, the cost function at the output port of processor 514a of Figure 5 would be the arithmetic difference between the actual red signal value, $r_a$, and the desired red signal value, $r_d$ (i.e. $r_a - r_d$).

Another possible cost function would describe signal differences which are important for video signal processing, for example, the difference between the actual and desired color ratios and/or the difference between the actual and desired luminance and color difference values. In this sense, for each of the output processors 514a through 514b of Figure 5, step 1016 calculates a cost function value, CF, of all of the actual output signals ($r_a$, $g_a$ and $b_a$) and all of the desired output signals ($r_d$, $g_d$ and $b_d$). One such cost function, again for processor 514a is given in equation (8).

$$CF = (r_a - r_d) + \left(\frac{r_a}{g_a} - \frac{r_d}{g_d}\right) + \left(\frac{r_a}{b_a} - \frac{r_d}{b_d}\right) \tag{8}$$

At step 1018, each of these cost function values is propagated backward through the neural network from the simulated system output terminals to the simulated system input terminals. This error propagation is illustrated by equation (9).

$$\delta_i = g'(x_i)CF(O_{ia}, O_{id}) \tag{9}$$

where $\delta_i$ is the error at the ith output terminal (i.e. the error in the output value produced by the ith output processor) multiplied by the gradient of the nonlinear function, CF is an appropriate cost function value which is calculated from $O_{id}$, the desired output value from the test pattern, and $O_{ia}$, the actual output value produced by the simulated neural network (e.g. the CF calculated in equation (8) or [$O_{ia} - O_{id}$]). In equation (9), $x_i$ is the sum of the weighted input values which were applied to the ith output processor and g'(x) is the first derivative of g(x), which is given in equation (10).

$$g'(x) = 2g(x)[1-g(x)] \tag{10}$$

At step 1020, an error value for each weighting factor is calculated for each processor in the output, hidden and input stages through back-propagation. These calculations are represented by equation (11).

$$\delta_{k-1,i} = g'(x_{k-1,i}) \sum_j W_{kij}\, \delta_i \tag{11}$$

where the subscript k designates a particular processor level (i.e. input, hidden or output), the subscript k-1 designates the previous level, the subscript i indicates a particular processor at that level and the subscript j indicates a particular input terminal of the ith processor.

At step 1022, the weighting factors, $W_{kij}$ are updated by changing their values by a correction term $\Delta W_{kij}$ which is determined in accordance with equation (12).

$$\Delta W_{kij} = \eta \delta_{k,i} V_{k-1,j} \qquad (12)$$

where $\eta$ is a correction factor which determines the rate at which the values of the weighting factors are allowed to change, and $V_{k,i}$ is the output value produced by the jth processor at level k. Once the weighting factors have been updated, the processing for this instance of this pattern is complete.

At step 1024, the simulation system determines if there are more patterns to be applied in this step. If so, control transfers to step 1012 to select the next input pattern and to apply its input values to the simulated system inputs. Otherwise, if no more patterns are to be applied, control transfers to step 1026 wherein the weighting factors generated by the process shown in Figure 10 are marked as the new weighting factors for the neural network.

Returning to Figure 9, after step 914, step 916 examines the history of the output errors produced by using the last several sets of weighting factors. In the exemplary embodiment of the invention, this is done by running the simulator, programmed with each of the sets of weighting factors that were generated using the last selected set of patterns, and comparing the output values generated by the simulated neural network to the respective desired output values contained in the generated training patterns.

Next, step 918 is invoked to determine if the errors are within an acceptable range of tolerance. If the errors are not acceptable it may be that the values of the weighting factors are diverging, as determined by step 920. If the weighting factors are diverging, step 922 is invoked to reduce the magnitude of the correction term $\eta$ in equation (11). As described above, by reducing the value of this term, the gain of the feedback system is reduced, causing the values of the weighting factors to change more slowly.

If, at step 920, it is determined that the weighting factor values are not diverging, step 924 is executed to determine if the weighting factor values are converging too slowly. If this is determined at step 924, step 926 is invoked which reorders the patterns in the set. If it is determined that the weighting factors are not converging to slowly at step 924, and after steps 922 and 926, step 928 is invoked which stores the new weighting factors for use by the simulated neural network and stores the error values that were used to generate the factors with the previous error values. The stored error values are used by step 916 as described above. After step 928, control is transferred to back to step 914.

If at step 918, it was determined that the error values for the current set of test patterns are acceptable, step 930 is invoked to determine if there are more functions to be simulated by the neural network. If so, step 934 is executed which generates training patterns for the next combination of functions. In the exemplary embodiment of the invention shown in Figure 4 only two functions are processed using the neural network, gamma correction and contrast compression. In this case, step 934 would generate training patterns for the combination of $F_1$ (gamma correction) and $F_2$ (contrast compression). In the exemplary embodiment of the invention these combined output functions are described by equations (3), (4) and (5).

In the exemplary embodiment of the invention shown in Figure 4a, the neural network 420 is used to implement color balance and aperture correction in addition to gamma correction and contrast compression. In this second exemplary embodiment of the invention, step 934 would be invoked a first time to combine the contrast compression function with the gamma correction function, a second time to combine the color balance function with the combined gamma correction and contrast compression function, and a third time to combine the aperture correction function with the combined gamma correction contrast compression and color balance functions. Furthermore, the embodiment of Figure 4a is general enough to be able to implement additional processes such as colorimetry correction and local histogram equalization.

The neural network may also be used to implement processes which may change from camera to camera but which are invariant in a particular camera. One such process may be to correct the output signal of the imager for aberrations in the lens system or in the imager itself. Once the imager and lens systems are mounted, these aberrations do not change. Accordingly, there would be no need for a control input signal to the neural network for this function. The function to correct for aberrations of this type may be the first of the series of functions to be implemented in the neural network.

Returning to Figure 9, each invocation of step 934 would be preceded by a process as illustrated by steps 914 through 928 in which the weighting factors for each processor in the neural network are updated using generated patterns for the previous function or combination of functions.

If, when step 930 is executed, it is determined that no more functions need to be simulated, step 932 is executed in which the final weighting functions are stored.

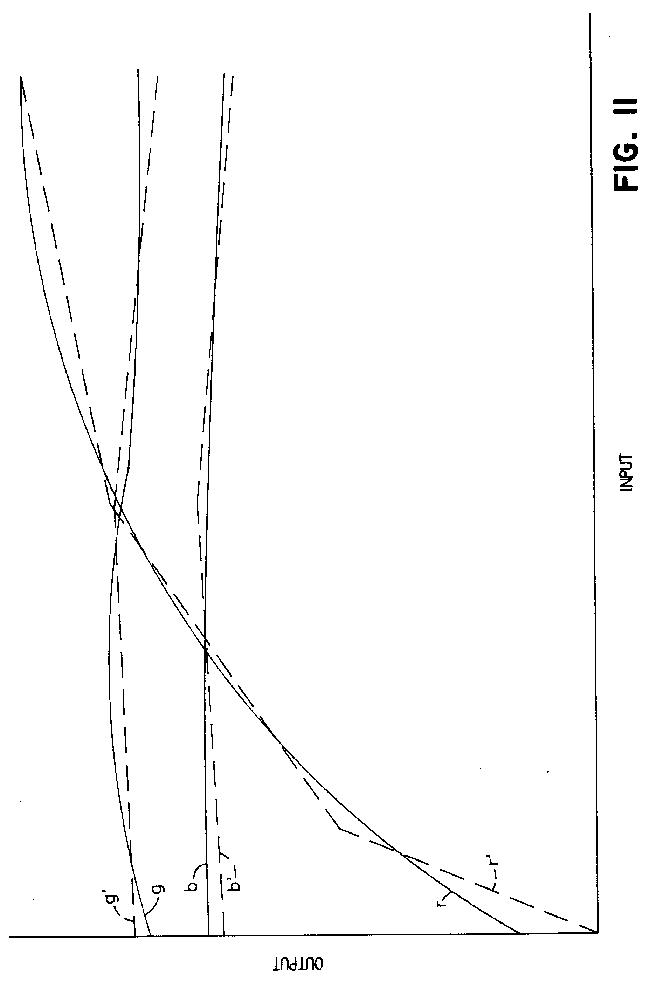

Referring once more to Figure 4, when the final weighting factors have been stored by the external computer, they are applied to the neural network 410 and the camera circuitry shown in Figure 4 is ready for operation. Figure 11 is a graph of input values versus output values which Illustrates the correspondence between the calculated red, green and blue signals (r, g and b) and the output values (r', g' and b') produced by the neural network 420 in response to one pair of values of the control parameters γ and cont as can be seen in this Figure, there are function values for which the difference between the neural network signal and the desired signal values are different. Because these functions (i.e. gamma and contrast compression) are highly subjective and the models are known to be estimations (especially in the case of gamma correction. These differences between the calculated function values and the values produced by the neural network, however, do not noticeably degrade the quality of the reproduced image.

While the neural network is shown as receiving one set of coefficient values to represent all possible input signal values, it may be desirable to produce multiple coefficient values, one for each of a predefined set of ranges for the control parameters of the various processors (i.e. γ and cont). In this alternative embodiment when one of the parameters is adjusted via the control panel 336, as shown in Figure 4. the weighting values to be used by the neural network 410 would be down-loaded into the network via the bus PM. In this alternative embodiment, these weighting values would be changed only when one of the control parameters changed to be in a different one of a predefined range of values, where each range of control parameter values is associated with a distinct set of weighting factor values.

Alternate Embodiment

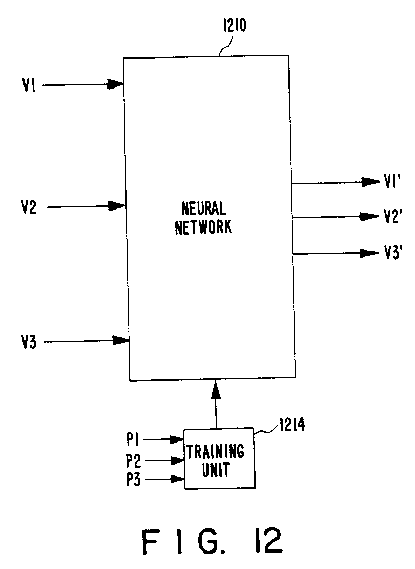

As mentioned above, one of the underlying ideas of the subject invention is to replace a system such as that shown in Figure 1 by an otherwise equivalent system which, in the alternate embodiment is shown in Figure 12. In Figure 12, the neural network 1210 is coupled to receive the data signal inputs V1, V2 and V3 but, unlike the first described embodiment, does not receive the parameter signals P1, P2 and P3 as inputs. Rather, parameter inputs P1, P2, and P3 are inputs to a training unit 214 which takes into consideration the parameter inputs when training neural network 1210 with input-desired-output vectors.

Although the parameter inputs indirectly affect the weighting factors for the network, they are not included as inputs to neural network 1210 in order to indicate that the neural network is dynamic rather than static. That is to say that for each new parameter setting, the neural network is updated with a new set of weighting factors. The parameter setting itself impacts, as described below, the intitial values and the desired output vectors used for on-line training. The neural network 1210 produces the output signals V1', V2' and V3' as in Figure 1.

The system shown in Figure 12 has many of the same advantages as the first described embodiment. An additional advantage is that in the alternate embodiment of the present invention a smaller neural network can be used because the control parameters are not used as inputs.

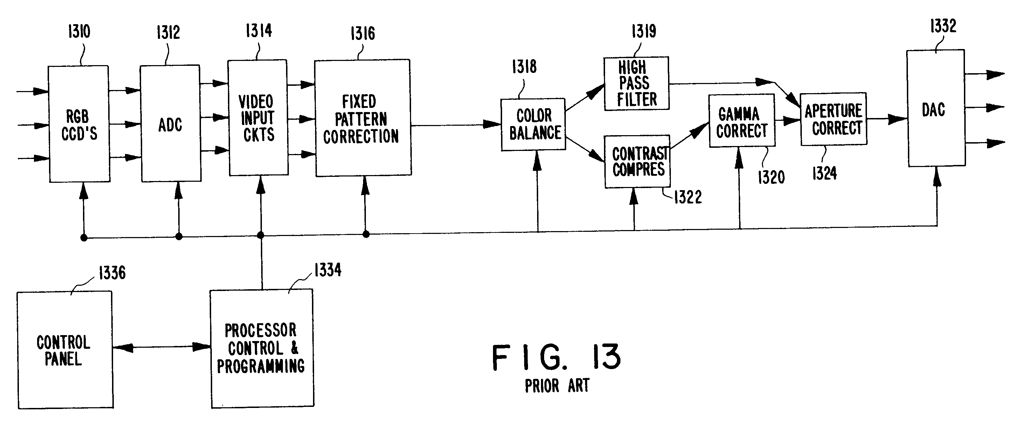

Figure 13 is a block diagram of an exemplary digital video camera system which is essentially the same as the camera system described with reference to Figure 3..

Each process performed on the signals shown in Figure 13 has, for example, a transfer function which is shown below:

Color Balance

$$cb(x) = x \cdot xgain \tag{13}$$

High-Pass Filter

$$ap(x,g)_{h,v} = g_{h,v} + \frac{g_{h-1,v}}{4} + \frac{g_{h,v-1}}{4} + \frac{g_{h+1,v}}{4} + \frac{g_{h,v+1}}{4} \tag{14}$$

Gamma Correction

$$\Gamma(x) = M \cdot \left(\frac{x}{M}\right)^{\gamma} \tag{15}$$

Contrast Compression

$$CC(x) = \left(\frac{M}{\max(r,g,b)}\right) \bullet \left(\frac{\max(r,g,b)}{M}\right)^c \bullet x \tag{16}$$

Aperture Correction

$$A(x,ap(x,g)) = x + apgain \; \bullet \; ap(x,g) \tag{17}$$

It should be noted that for Equations (13) through (17), M is a normalizing factor that is the maximum possible value for a pixel, $\max(r,g,b)$ is the maximum value of a particular $[r,g,b]$ vector, the vector $g$ is g and its 4-neighbors, i.e., above, below, left, and right, and x is r,g, or b. The entire process can be viewed as the following transformation, or remapping:

$$\Phi_{rgain,ggain,bgain,c,\gamma,apgain}(r,g,b) = A(\Gamma((CC(cb(r,g,b))),ap(r,g,b))) \tag{18}$$

The video input circuits 1314, fixed pattern correction circuitry 1316, color balance processor 1318, gamma correction processor 1320, and contrast compression processor 1322 are controlled by the process control programming circuitry 1334. This circuitry receives information from, and provides status information to a control panel 1336. In addition to controlling the signal processing system, control and programming circuitry 1334 also generates clock signals and other timing signals for the CCD imagers 1310, the ADC 1312 and the DAC 1332.

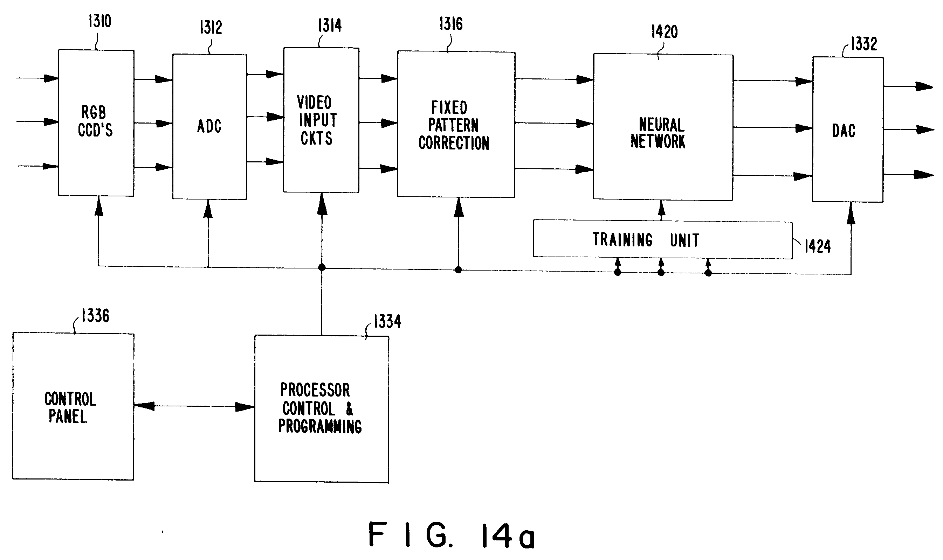

Figure 14a shows a video camera configuration which is the same as that shown in Figure 13 except that a neural network 1420 and on-line training unit 1424 (described in detail below) replace the color balance processor 1318, gamma correction processor 1320, contrast compression processor 1322, high pass filter 1319 and aperture correction unit 1324. As seen, the on-line training unit 1424 receives parameter inputs and generates the appropriate weighting factors for neural network 1420. Upon a change of parameter inputs, training unit 1424 conducts a simulation using stored test vectors. The results of the simulation are then used to determine and update the programmable weighting factors for neural network 1420.

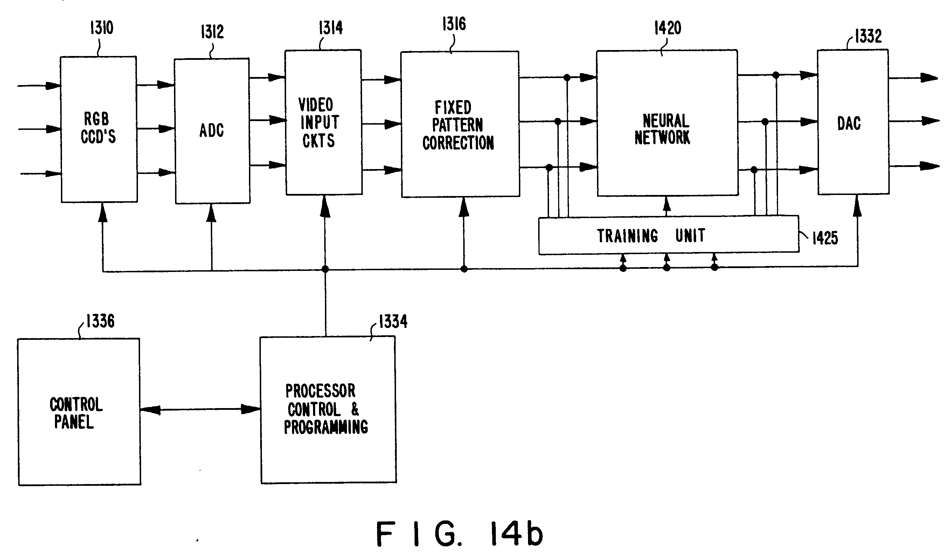

Figure 14b shows an alternate embodiment of the on-line training unit 1425 of the present invention. In this embodiment, the on-line training unit 1425 is coupled to both the inputs and outputs of neural network 1420 so that it can apply input vectors, extract output vectors and compare them with simulated test results. The results of the comparison are then used by training unit 1425 to update the programmable weighting factors of neural network 1420. One advantage of actually using neural network 1420 for its own on-line training is that it would be faster than, for example, a general purpose processor employed by training unit 1424.

It can be appreciated by those skilled in the art the interconnection of the training unit 1425 to both the input and output signal lines of the neural network 1420 can be accomplished by, for example, multiplexers or high impedance drivers.

Disregarding, for the moment, the complexity of the neural network 1420, the circuitry shown in Figure 14a is simpler than the circuits in Figure 13 if only because it includes fewer components. In addition, as described below, the engineering effort needed to produce acceptable signal processing from the circuits shown in Figures 14a may be considerably less than that needed to produce the same level of performance from the circuits shown in Figure 13.

Even when the complexity of the neural network is considered, the circuitry shown in Figure 4a may be less costly than that shown in Figure 13 since the neural network 1420 and training unit 1424, or the processing elements which make up the networks, may be off-the-shelf general purpose items and, thus, may benefit from volume discounts. In addition, the neural network may be designed to use multiple identical processing elements.

In Figure 14a, the color balance, the high pass filter, the aperture correction, the gamma correction and contrast compression functions are combined and performed by neural network 1420. The combination of these functions is highly nonlinear. The plurality of functions are combined to produce the respective signals r', g' and b' from the input color signals r, g and b.

In equations (13)-(17) or composite equation (18), the signals r', g' and b' are the result of performing the above mentioned functions on the respective r, g and b input signals. This combined process is very nonlinear since it involves multiple exponentials and maximums. In addition one of the output color output signals can change if the corresponding input color signal is the same but one of the other input color signals has changed.

Furthermore, the equations do not lend themselves to being implemented easily either in analog or digital circuitry. While equation (18) may be implemented by a combination of circuits which produce each function, such an implementation severely limits the flexibility of the circuit and requires significant development effort. Finally, if the function is implemented as a large look up table (LUT) the amount of memory needed to hold the LUT even for eight-bit input values would be so large ($2^{(8*7)} = 2^{56}$ or $7.2 \times 10^{16}$) as to make the device impractical.

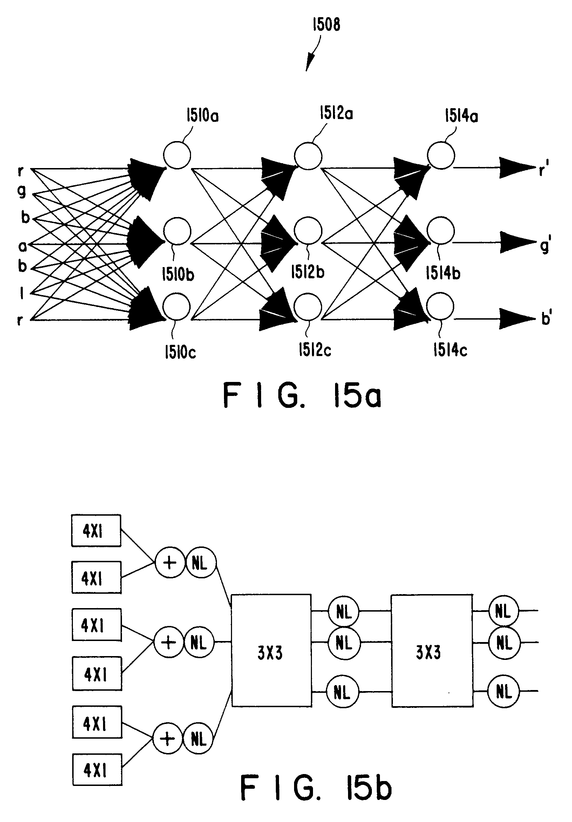

Figures 15a and 15b show a nodal diagram of a neural network which is suitable for use as network 1420 and a functional block diagram of an exemplary hardware implementation of the network shown in Figure 15a.

As shown in Fig. 15a, network 1420 includes three layers of nodes, input nodes 1510a through 1510c, hidden nodes 1512a through 1512c and output nodes 1514a through 1514c. Each of the input nodes, for example 1510a, receives all of the input signals, the color signals r, g and b as well as the g color signal for the pixels above, below, left and right, respectively. Again, network 1420 does not have parameter inputs; the parameters are effectively "strained" into the network during the learning phase described in detail below. Not including the parameters as inputs has the advantage of reducing the number of nodes necessary for a given accuracy, yet, has the disadvantage of requiring at least some on-line training for each new set of parameters.

Each input processor in turn provides its output signal to all of the hidden processors 1512a through 1512c. Each hidden processor, for example 1512a, produces three output signals, one of which is applied to output node 1514a another, to 1514b and the third, to output node 1514c. The output nodes 1514a, 1514b and 1514c produce the respective processed color signals r', g' and b'.

Since the aperture correction function is a spatial filtering operation, it is desirable for neural network 1420 to include circuitry which stores multiple lines of video samples so that the multiple samples, which surround (i.e., above, below, right and left) the one sample being processed, are applied as input values to neural network 1420. It should be noted that this circuitry need not be within neural network 1420 as long as the neural network has access to the delayed and advanced samples provided to the signal processing system.

Referring again to Figure 15a, each node in the network calculates successive weighted sums of successive values applied to its input ports and then transforms the weighted sums through a sigmoidal transfer function (shown in Fig. 15b as NL) to produce its output value. For the input and hidden processors, these output values are applied to all of the processors in the next stage. For the output processors, these output values are the signals r', g' or b'.

Fig. 15b shows an exemplary hardware implementation for the network in Fig. 5a. In this implementation, the processing performed by the input nodes of Fig. 15a is implemented using three pairs of 4x1 dot product units such as, for example, a TRW TDC2246. It should be noted that each pair of 4x1 units receives all 7 inputs. The outputs of the individual 4x1 units for each pair are added and the result is subject to sigmoidal non-linear (NL) transformation which can be implemented using memory.

The output signal of each of the NL circuits is applied to a 3x3 matrix-vector multiplier which performs a sum of weighted products (representing the hidden nodes of network 1508) and outputs its results to a second set of NL circuits. The 3x3 matrix-vector multiply, in the exemplary embodiment, is implemented using a TRW TMC2250.

Finally, the output signals from the second set of NL circuits are applied to a second 3x3 matrix vector multiplier which performs a second sum of weighted products (representing the output nodes of network 1508) and outputs its results to a third set of NLs. After the final set of NLs perform the non-linear sigmoidal processing, the r', g' and b' signals are output.

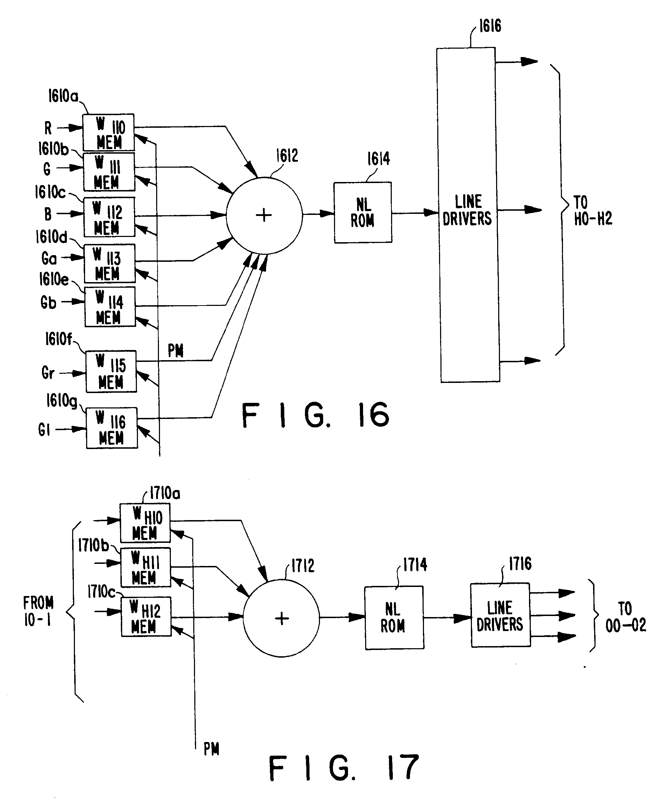

Figure 16, notwithstanding the exemplary embodiment of Figure 15b, is a functional block diagram of circuitry suitable for use as one of the input nodes. In Figure 16, samples of the three color signals r, g and b and samples of the g color signals for pixels above, below, left and right are applied to each of the weighting circuits 1610a, 1610b, 1610c, 1610d, 1610e, 1610f and 1610g. The respective weighting factors applied by these circuits are WIi0, WIi1, WIi2, WIi3, WIi4, WIi5 and WIi6, where the subscript I indicates that these are weighting factors from an input processor and the subscript i identifies the particular input processor. These weighting factors are programmable via a programing bus PM. In the exemplary embodiment of the invention each of the circuits 1610a through 1610g may be a dedicated multiplier circuit in which the programmable weighting factor is applied to the multiplier input port and the respective input signal (r, g, b, ga, gb, gr or gl) is applied to the multiplicand input port.

The weighted output samples provided by each of the weighting circuits 1610a through 1610g are applied to a summing circuit 1612. In a digital embodiment of the invention, the summing circuit 1612 may be implemented as a tree of adders.

The output samples provided by the summing circuit 1612 are applied to a circuit 1614 which implements a nonlinear transfer function. In the exemplary embodiment of the invention, the circuit 1614 is a Read-Only Memory (ROM) which is programmed to transform the input value supplied as addresses to output values substantially equal to the input values as modified by the transfer function. In the exemplary embodiment of the invention the transfer function implemented by the circuitry 1614 is a sigmoidal function $g_\beta(x)$ having the form shown in equation (19).

$$g_\beta(x) = \frac{1}{1 + e^{-\beta x}} \tag{19}$$

In this embodiment of the invention, the $g_\beta(x)$ is implemented with $\beta$ having a value of 1. In the materials that follow, this function is referred to as simply $g(x)$.

The output signal of the nonlinear circuit 1614 is applied to a line driver circuit 1616 which generates 3 copies of the output signal for application to each of the hidden nodes 1512a through 1512c, shown in Figure 15a. It should be noted that the output of NL 1614 can either be copied before it is output by the node or after it is received as an input to a subsequent node.

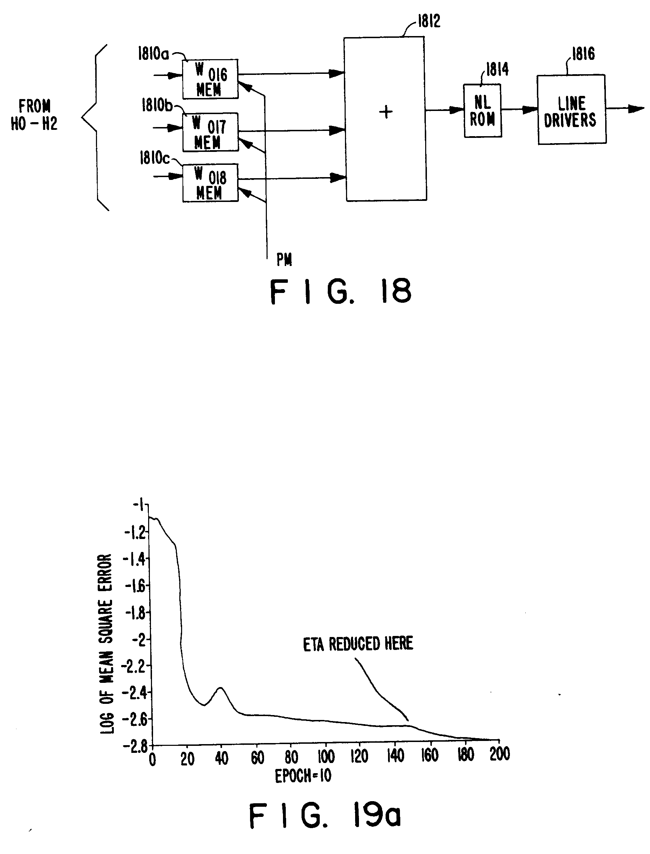

An exemplary hidden processor is shown in Figure 17. This circuit is the same as the circuitry shown in Figure 16 except that each of the weighting circuits 1710a through 1710c receives an input signal from a respectively different one of the input nodes 1510a through 1510c, shown in Figure 15a. Each of the weighting factors, WHi0 through WHi2, held by the respective weighting circuits 1710a through 1710c is independently programmable via the programming bus PM. In the notation for these weighting factors, the subscript H indicates that these are hidden processor factors and the subscript i designates a particular hidden processor.

In addition, the circuit shown in Figure 17 is similar to that shown in Figure 16 in that the line driver 1716 of the hidden processor also generates three copies of the output signal. These three output signals are applied to respectively different ones of the output processors 1514a, 1514b and 1514c shown in Figure 15a.

Figure 18 is a block diagram of an output processor suitable for use as one of the processors 1514a, 1514b and 1514c. As shown in the Figure, the output processor has a similar structure to the input processor and the hidden processor. The output processor has 3 input signals and, so, 3 weighting circuits, 1810a through 1810c. Each of the weighting factors, WOi0 through WOi2, implemented by the respective weighting circuits 1810a through 1810c is independently programmable via the programming bus PM. In the notation for these weighting factors, the subscript O indicates that these are output processor factors and the subscript i designates a particular output processor. The weighted output values provided by the weighting circuits 1810a through 1810c are summed in a summing circuit 1812.

The output signal of the summing circuit 1812 is applied to a nonlinear ROM 1814 which may be identical to the nonlinear ROM's 1614 and 1714 shown in Figures 16 and 17 respectively. The output signal provided by the nonlinear ROM 1814 is applied to a line driver 1816 which generates an output signal having sufficient strength to drive the circuitry to which the output processor 1514a, 1514b or 1514c are coupled.

Referring again to Figure 14a, the neural network 1420 is programmed to implement the transfer functions of the color balance, the high pass filter, the aperture correction, the gamma correction and contrast compression algorithms by programming the values of the weighting factors in each of the input, hidden and output processors. These weighting factors are programmed using a learning algorithm based on a set of known input/output signal combinations. This algorithm, which is implemented on training unit 1424, determines values of the weighting factors which produce an acceptable approximation of the combined functions, as defined by equation (18). One method by which these weighting values are determined, commonly referred to as back-propagation of error, is described below.

It should be noted that the network of Fig. 15a is reduced in size as compared to, for example, the network of the first embodiment. This reduced size results from not including the parameter settings in the input vector. However, not including the parameter settings in the input vector means that the neural network 1420 should be retrained for each new parameter setting, thus, requiring on-line training.

An important feature of this alternate embodiment of the present invention is embodied in its network training technique which is a combination of off-line training and on-line training. The off-line training is designed to reduce the amount of time needed for on-line training, for example, no more than 1 second in the exemplary embodiment.

To facilitate this, it is important to have good initial weight values before on-line training begins. In the exemplary embodiment, this is achieved by training the neural network off-line for a predetermined set of parameter vectors, and storing the set of resultant weighting factors. Then, during on-line operation of the camera processor, for some desired parameter setting, the appropriate initial weight vector is used. In the exemplary embodiment, the appropriate initial weight vector is determined by a distance metric which compares the desired parameter vector to the stored sampled parameter vectors, and the stored sampled parameter vector with the "closest" parameter setting is used. Obviously, if the on-line parameter setting is the same as one of the stored sampled parameter vectors, then on-line training need not be performed because suitable weighting factors for this parameter setting are already stored in memory.

An example of a distance metric suitable for determining the closest stored parameter setting, $P_s^*$, is

$$D(P_d, P_s) \sum_{i=1}^{n} (P_{di} - P_{si})^2$$

where $P_d = (p_{d1}, p_{d2}, p_{d3}...p_{dn})$ is the desired parameter vector; where $P_s = (p_{si})$ are the stored parameter vectors, such that $s=1...k$ and $i=1...n$, where n is the number of control parameters and k is the number of predetermined parameter vectors. $D(P_d, P_s)$ is computed for s=1,...k, and the s renders the minimum $D(P_d, P_s)$ yields $P_s^*$, or

$$\min_{s} [D(P_d, P_s)] \Rightarrow P_s^*$$

The predetermined weights associated with $P_s^*$ are then used as the initial weights for on-line training.

It should be noted that, even if an on-line change in the parameter settings is not identical to a stored sampled parameter setting, a set of stored weighting factors may still be adequate for the particular parameter setting. The determination as to whether a set of weighting factors is adequate for a range of values within a particular dimension of the parameter vector, thus requiring no on-line training, can be calculated off-line or programmed into a flexible distance metric.

As an example of the off-line/on-line training strategy, assume the parameter vector setting of Figure 19a (rgain = 1, ggain = 1 bgain =1, C = .4, gamma = 1, apgain = 2). Starting with small random initial weights, off-line training proceeds and produces, for example, the error shown in Fig. 19a. After this training, these weights are stored and associated with the parameter vector setting described above.

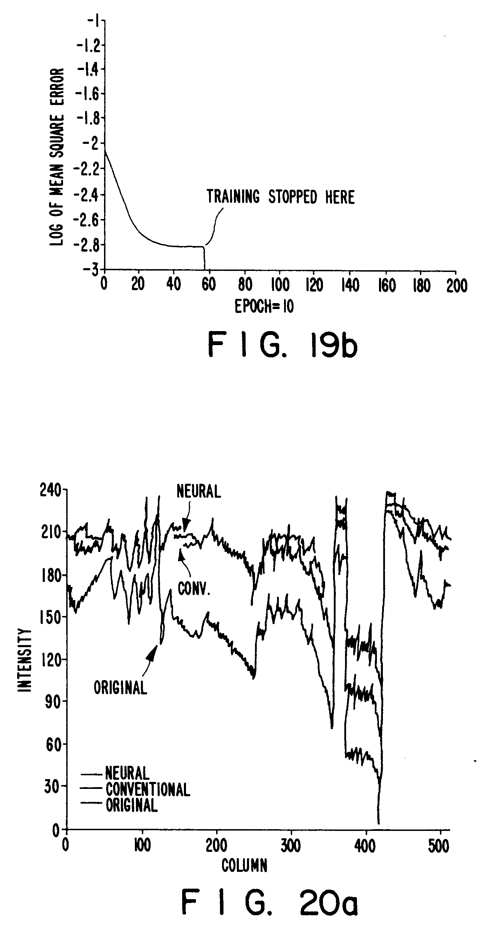

Then imagine that during operation of the camera processor, a parameter setting close to this was desired (for example, apgain=3, and all other values the same). The neural network 1420 is then trained for the new setting, but the initial weight values used would be those computed for the parameter settings of Fig. 19a. Training would proceed and produce the errors of Fig. 19b. It can be seen from Fig. 19b that the initial error is small, and training reached an acceptable error after only about 500 epochs, whereas in Fig. 19a, the error was not yet acceptable even after 2000 epochs.

One technique for computing weighting values, as described in detail below, is to first "train" the network for a single function. Then, using those values, train the network for a composite function consisting of the first function and a second function. This process is continued until each of the functions is accounted for in the neural network.

The above procedure facilitates the training of complex neural networks which may otherwise be too difficult to train directly from the ultimate composite function. In the exemplary embodiment of the present invention, the neural network can be trained off-line using this procedure or, because of its reduced size and complexity, it can be trained directly from the ultimate composite function as described by Equation (6).

The flowcharts and related descriptions of Figs 9 and 11 illustrate a general method of determining off-line the weighting values for multiple sets of parameter settings which are then stored for use in on-line training is described. In the exemplary embodiment of the invention, this algorithm is implemented "off-line" using a general purpose computer.

The off-line processing is for determining and storing initial weighting factors which are used to initialize the neural network prior to the on-line training process. This off-line processing is performed for each new parameter setting selected for training. In the exemplary embodiment, a representative sampling of the parameter space is taken keeping in mind that the resultant weighting values are to be used as initial values for on-line training.

Although Figures 9 and 11 are described in detail above, it should be noted that in the alternate embodiment, to produce test patterns, the program selects a γ parameter setting, then generates, for example, multiple sets of random input values of r, g, b, ga, gb, gr and gl and applies these values to the gamma equation (3) to obtain the corresponding output values representing the gamma corrected r, g and b color signals. Each set of input values and its corresponding output values forms one training pattern for function $F_1$ having the selected γ setting. When a sufficient number of different patterns have been generated control passes from step 912 to step 914 in which the system is trained using the generated patterns. The neural network is trained to implement the transfer function that was used to generate the training patterns by repeatedly applying the patterns to the simulated network. Step 914 represents only one application of the training patterns.

So, if, when step 930 is executed, it is determined that no more functions need to be simulated, step 932 is executed in which the final weighting factors for the particular parameter setting are stored. The entire process is then repeated for each set of parameter settings resulting in a set of stored weighting factors for each sampled parameter setting.

Referring once more to Figure 14a, when the final sets of weighting factors have been stored, the camera circuitry shown in Figure 14a is ready for operation.

In the exemplary embodiment of the present invention, due to the time concerns of training the function one after another, the on-line training of the neural network employs a slight variation of that described with respect to Figs. 9 and 11. During on-line training, rather than training the neural network function by function, the ultimate composite function is used.

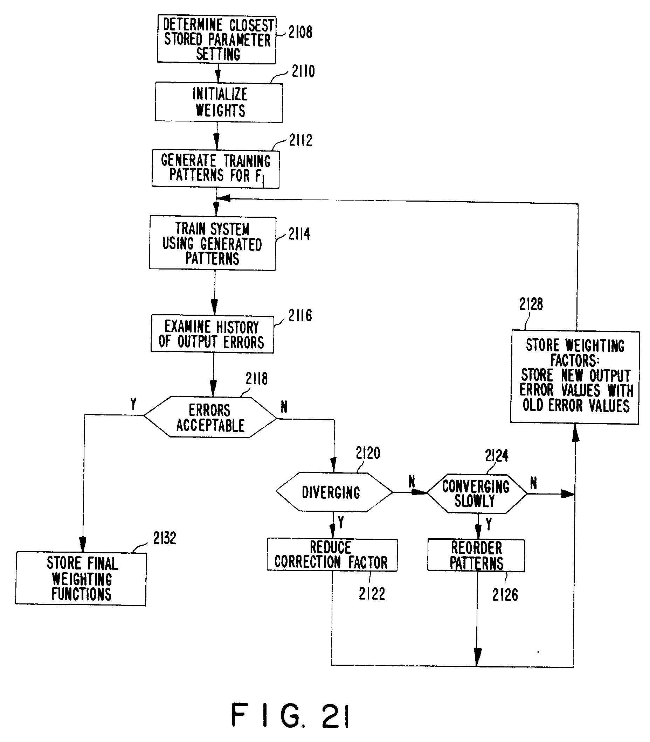

Fig. 21, similar to that of Fig. 9, shows a flowchart illustrating the on-line training technique used in the exemplary embodiment of the present invention. In step 2108, the distance metric is used to determine which of the parameter settings processed off-line is closest to the on-line parameter setting. Next, in step 2110, the weighting factors for the closest off-line parameter setting are used as the initial weights for on-line training.

The training patterns of step 2112 are calculated directly from equation (18) to generate input-desired-output vectors. In doing so, the [r,g,b] input space is sampled linearly, sampling each dimension at 5 points. For each, [r,g,b] vector, the green neighbors are drawn randomly using a Gaussian distribution, with the center green pixel as the mean and 0.1*M (where M is the same as that in Eqs. (15) and (16)) as the standard deviation. The output vectors are then generated using the pixel input vector, the parameter input vector and Equation (18). This procedure generates a total of 125 vectors for training.

The description for the remainder of the flowchart is the same as described above for Fig. 9. In the exemplary embodiment of the invention, this algorithm is implemented "on-line" using a general purpose processor in the video camera, for example the training unit 1424 shown in Figure 14a.

In the alternate embodiment shown in Figure 14b, the training algorithm would likely be faster and less complex because the actual neural network 1420 would be used to "simulate" the results during the on-line training process. Training unit 1425, however, would still be used to perform the remaining functions, as described above, in determining proper weighting factors.

As mentioned, the above-described procedure for computing the weighting values by using directly the ultimate composite function is desirable for small, relatively simple neural networks; if, however, the neural network of the present invention includes additional functionality (i.e., other processing units in the video camera) or simply becomes more complex in a different application such as medical imaging or space imaging, then, the more generally applicable training procedure described above should be used.

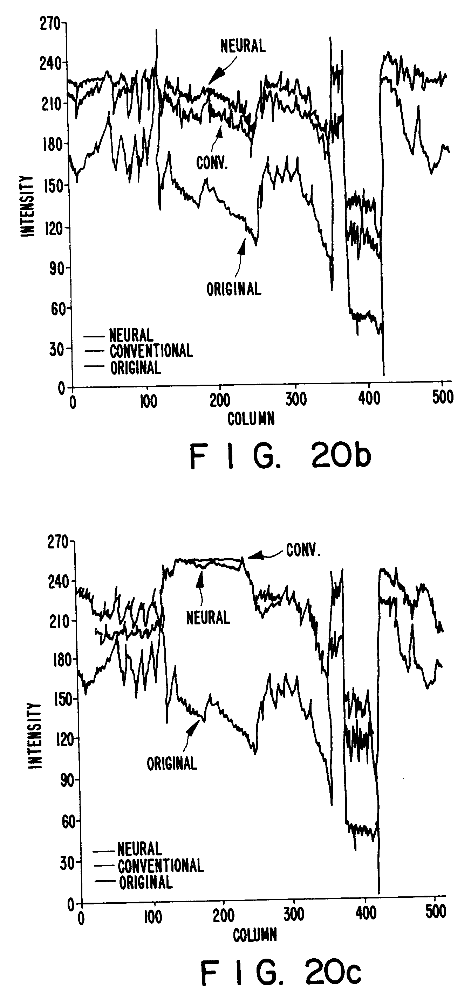

Figs. 20a-20c show the results of rudimentary comparisons between Conventional and neural processing of the exempary embodiment of the present invention. A color test image was selected randomly. Various parameter settings were selected and the test image was Simulated with both the neural and conventional processor. The 1D plots were generated by plotting a single row of the image. Some comparisons are presented in Figs. 20a and 20b. In Fig. 20a, the parameter vector was [rgain=1, ggain=1, bgain=1, gamma=1, contrast=0.4, apgain=0] and in Fig. 20b, the parameter vector was [rgain=1, ggain=1, bgain=1, gamma=0.5, contrast=1.0, apgain=1.0].

As an example of the programmability of the neural method, consider changing the contrast compression transformation function. The new transformation increases the saturation twice as much as the luminance (while maintaining the hue) as opposed to equally increasing the saturation and luminance (which is the function of Equation 4). This transformation change requires no change to the neural network architecture; however, by definition, a conventional analog or digital signal processing system would need to be updated. A test image was processed using this new form of contrast compression, and the results can be seen in Fig. 20c. In Fig. 20c, the parameter vector was [rgain=1, ggain=1, bgain=1, gamma=1, contrast=0.4, apgain=1].

Note that Fig. 20c has essentially the same errors with the new contrast compression scheme as with the previous definition. This is essentially the power of the neural network; even though the desired transformation changed, the architecture of the network remained the same, only the weights changed.

While the invention has been described in terms of an exemplary embodiment it is contemplated that it may be practiced as outlined above within the scope of the appended claims.

## Claims

1. A signal processing system which processes a plurality of input signals according to at least first and second non-linear signal processing functions to produce a plurality of output signals, the system comprising:

   a neural network (410, 420, 1210) having a plurality of programmable weighting factors ($W_{li}$); a plurality of input terminals for receiving the plurality of input signals(R, G, B), and a plurality of control signals (GAMMA, CC); and a plurality of output terminals for providing the plurality of output signals (R, G, B);

simulation means for generating a plurality of values, each corresponding to a respectively different one of the weighting factors, including:

means for simulating a response of the neural network to a plurality of test patterns, each pattern containing an input vector, a control vector and an output vector; and

means for changing respective simulated values assigned to the weighting factors to conform the simulated response to the output vectors of the test patterns;

means for generating a first plurality of test patterns, each containing an input vector, a control vector and a desired output vector, for the first non-linear function and for applying the test patterns to the simulation means to produce preliminary values for the plurality of weighting factors;

means for generating a second plurality of test patterns representing a combination of the first and second non-linear signal processing functions, each pattern in the second plurality of test patterns containing an input vector, a control vector and a desired output vector, and for applying the second set of test patterns to the simulation means to produce final values for the plurality of weighting factors; and

means for applying the final values of the weighting factors to the neural network to enable the neural network to process the input signals according to the first and second non-linear signal processing functions.

2. A system according to claim 1, wherein the simulation means comprises:

a simulator which simulates a response of the neural network to each of the input vectors and control vectors of the test patterns to produce a vector of simulated output values;

means for calculating a plurality of cost function values, each cost function value representing a mathematical function of the simulated output values selected and corresponding desired output values from the desired output vector;

back propagation means, responsive to the cost function values, for modifying each of the programmable weighting factors to minimize differences between respective values in each of the output vectors and the values in the vector of simulated output values; and

means for determing when the weighting factors have converged to values which allow the neural network to emulate the signal processing function with acceptable error.

3. A system according to claim 2 wherein each cost function value is a function of all of the simulated output values of the neural network.

4. A system according to claim 2, wherein the system is a color video signal processing system which produces at least first and second color signal values as respective first and second output values in both the simulated and desired output vectors, and the cost function is a function of a difference between a ratio of the simulated first and second output values and a ratio of the desired first and second output values.

5. A system according to claim 2, wherein the system is a color video signal processing system which produces at least first and second color signal values as respective first and second ones of both the simulated and desired output values, and the cost function is a function of a combination of the first and second simulated output values and the first and second desired output values which represents a difference between a first luminance value produced by the simulated output values and a second luminance value produced by corresponding desired output values.

6. A signal processing system according to claim 1, wherein the input signals are video information signals, the first non-linear signal processing function is gamma correction and the second non-linear signal processing function is contrast compression.

7. A system according to claim 6 further including means for generating a third set of test patterns representing results of processing the input values using a color correction function in combination with the gamma correction function and the contrast compression function; and

means for training the neural network using the third set of test patterns after the neural network has been trained using the second set of test patterns to produce a set of values for the plurality of weighting factors to emulate the combined color correction, contrast compression and gamma correction functions.

8. A system according to claim 7 further including means for generating a fourth set of test patterns representing results of processing the input values using an aperture correction function in combination with the gamma correction function, the contrast compression function and the color correction function; and

means for training the neural network using the fourth set of test patterns after the neural network has been trained using the third set of test patterns to produce values for the plurality of weighting factors which allow the neural network to emulate the combined aperture correction, color correction, contrast compression and gamma correction functions.

9. A signal processing system according to claim 6, wherein the video information signals include red, green and blue color signals.

10. A signal processing system according to claim 6, wherein the video information signals include red, green and blue color signals and the first and second non-linear signal processing functions are selected from a group consisting of gamma correction, contrast compression, color balance and aperture correction.

11. A method of processing a plurality of input signals according to at least first and second non-linear signal processing functions to produce a plurality of output signals, in a system which includes a neural network having a plurality of programmable weighting factors, the method comprising the steps of:

generating a first plurality of test patterns, representing the first non-linear signal processing function, each pattern in the first plurality of test patterns containing an input vector, a control vector and an output vector, for the first non-linear function;
simulating a response of the neural network to the first plurality of test patterns and modifying the weighting factors of the neural network to conform the simulated response of the neural network to the output vectors contained in the first plurality of test patterns to generate a plurality of preliminary values for the weighting factors;
generating a second plurality of test patterns representing a combination of the first and second non-linear signal processing functions each pattern in the second plurality of test patterns including an input vector, a control vector and an output vector;
simulating a response of the neural network to the second plurality of test patterns and modifying the weighting factors of the neural network to conform the simulated response of the neural network to the output vectors contained in the second plurality test patterns to generate a plurality of final values for the weighting factors;
applying the final values of the weighting factors to the neural network; and processing the input signals using the neural network to produce the output signals.

**Patentansprüche**

1. Signalverarbeitungssystem, welches eine Mehrzahl von Eingabesignalen in Abhängigkeit von mindestens ersten und zweiten nicht-linearen Signalverarbeitungsfunktionen verarbeitet, um eine Mehrzahl von Ausgabesignalen zu erzeugen, wobei das System aufweist:

ein neuronales Netzwerk (410, 420, 1210) mit einer Mehrzahl von programmierbaren Gewichtungsfaktoren ($W_{li}$); einer Mehrzahl von Eingabeanschlüssen zum Aufnehmen bzw. Empfangen der Mehrzahl der Eingabesignale (R, G, B), und einer Mehrzahl von Regel- bzw. Steuersignalen (GAMMA, CC); und einer Mehrzahl von Ausgabeanschlüssen zum Ausgeben bzw. zur Verfügung stellen der Mehrzahl der Ausgabesignale (R, G, B);
eine Simulationsvorrichtung zum Erzeugen einer Mehrzahl von Werten, wobei jeder einem jeweils anderen der Gewichtungsfaktoren entspricht, mit:

einer Vorrichtung zum Simulieren einer Antwort bzw. eines Ansprechverhaltens des neuronalen Netzwerks auf eine Mehrzahl von Testmuster, wobei jedes Muster einen Eingabevektor, einen Regel- bzw. Steuer- bzw. Kontroll-Vektor und einen Ausgabevektor enthält; und
einer Vorrichtung zum Verändern der jeweils simulierten Werte, welche den Gewichtungsfaktoren zugeordnet bzw. zugewiesen sind, um das simulierte Ansprechverhalten bzw. die simulierte Antwort an die Ausgabevektoren der Testmuster anzupassen bzw. anzugleichen;
einer Vorrichtung zur Erzeugung einer ersten Mehrzahl von Testmustern, welche jeweils einen Eingabevektor, einen Regel- bzw. Steuervektor und einen gewünschten Ausgabevektor aufweisen, für die erste nicht-lineare Funktion und zum Anlegen der Testmuster an die Simulationsvorrichtung, um vorläufige Werte für die Mehrzahl der Gewichtungsfaktoren zu erzeugen;
einer Vorrichtung zum Erzeugen einer zweiten Mehrzahl von Testmustern, welche eine Kombination der ersten und zweiten nicht-linearen Signalverarbeitungsfunktionen darstellen, wobei jedes Muster in der zweiten Mehrzahl der Testmuster einen Eingabevektor, einen Regel- bzw. Steuervektor und einen gewünschten Ausgabevektor enthält, und zum Anlegen des zweiten Satzes der Testmuster an die Simulationsvorrichtung, um endgültige bzw. Endwerte für die Mehrzahl der Gewichtungsfaktoren zu erzeugen; und

einer Vorrichtung zum Anlegen der Endwerte der Gewichtungsfaktoren an das neuronale Netzwerk, um es dem neuronalen Netzwerk zu ermöglichen, die Eingabesignale in Abhängigkeit von bzw. gemäß den ersten und zweiten nichtlinearen Signalverarbeitungsfunktionen zu verarbeiten.

2. System nach Anspruch 1, wobei die Simulationsvorrichtung aufweist:

einen Simulator, welcher eine Antwort bzw. ein Ansprechverhalten des neuronalen Netzwerkes bezüglich eines jeden der Eingabevektoren und Regel- bzw. Steuervektoren der Testmuster simuliert, um einen Vektor von simulierten Ausgabewerten zu erzeugen;

eine Vorrichtung zum Berechnen einer Mehrzahl von Kostenfunktionswerten, wobei jeder Kostenfunktionswert eine mathematische Funktion der simulierten ausgewählten Ausgabewerte darstellt und den gewünschten Ausgabewerten des gewünschten Ausgabevektors entspricht;

eine Rückführungs- bzw. Rückkopplungs-(back propagation)Vorrichtung, welche auf die Kostenfunktionswerte anspricht bzw. reagiert, zum Modifizieren bzw. Verändern von jedem der programmierbaren Gewichtungsfaktoren, um die Differenzen zwischen den jeweiligen Werten bei jedem der Ausgangsvektoren und der Werte in dem Vektor der simulierten Ausgangs- bzw. Ausgabewerte zu minimieren; und

einer Vorrichtung zum Bestimmen, wann die Gewichtungsfaktoren zu Werten konvergiert sind, welche es ermöglichen, dass das neuronale Netzwerk die Signalverarbeitungsfunktion mit einem annehmbaren Fehler emuliert bzw. simuliert.

3. System nach Anspruch 2, wobei jeder Kostenfunktionswert eine Funktion aller simulierten Ausgabewerte des neuronalen Netzwerkes ist.

4. System nach Anspruch 2, wobei das System ein Farbvideo-Signalverarbeitungs-System ist, welches mindestens erste und zweite Farbsignalwerte als jeweilige erste und zweite Ausgabewerte in beiden, den simulierten und gewünschten Ausgabevektoren, erzeugt, und die Kostenfunktion ist eine Funktion einer Differenz zwischen einem Verhältnis der simulierten ersten und zweiten Ausgabewerte und einem Verhältnis der gewünschten ersten und zweiten Ausgabewerte.

5. System nach Anspruch 2, wobei das System ein Farbvideo-Signalverarbeitungs-System ist, welches mindestens erste und zweite Farbsignalwerte als jeweils erste und zweite von beiden, den simulierten und gewünschten Ausgabewerten, erzeugt, und die Kostenfunktion ist eine Funktion einer Kombination bzw. Verknüpfung der ersten und zweiten simulierten Ausgabewerte und der ersten und zweiten gewünschten Ausgabewerte, welche eine Differenz zwischen einem ersten Leuchtdichte- bzw. Helligkeits-(luminance)Wert, welcher durch die simulierten Ausgabewerte erzeugt wird, und einem zweiten Leuchtdichte- bzw. Helligkeitswert, welcher durch die entsprechenden gewünschten Ausgabewerte erzeugt wird, darstellt.

6. Signalverarbeitungssystem nach Anspruch 1, wobei die Eingabesignale Videoinformationssignale sind, die erste nicht-lineare Signalverarbeitungsfunktion ist eine Gamma-Korrektur und die zweite nichtlineare Signalverarbeitungsfunktion ist eine Kontrast-Kompression bzw. - Verdichtung.

7. System nach Anspruch 6 weiter aufweisend eine Vorrichtung zum Erzeugen eines dritten Satzes von Testmustern, welche die Ergebnisse der Verarbeitung der Eingabewerte darstellen, unter Verwendung einer Farbkorrekturfunktion in Kombination mit der Gamma-Korrekturfunktion und der Kontrast-Verdichtungs-Funktion; und eine Vorrichtung zum Trainieren des neuronalen Netzwerkes unter Verwendung des dritten Satzes der Testmuster, nachdem das neuronale Netzwerk trainiert wurde unter Verwendung des zweiten Satzes der Testmuster, um einen Satz an Werten für die Mehrzahl der Gewichtungsfaktoren zu erzeugen, um die kombinierte Farbkorrektur, Kontrast-Kompression und Gamma-Korrektur-Funktionen zu emulieren bzw. simulieren.

8. System nach Anspruch 7 weiter aufweisend eine Vorrichtung zum Erzeugen eines vierten Satzes von Testmustern, welche die Ergebnisse einer Verarbeitung der Eingabewerte darstellen, unter Verwendung einer Apertur- bzw. Öffnungs-Korrektur-Funktion in Kombination mit der Gamma-Korrektur-Funktion, der Kontrast-Kompressions-Funktion und der Farb-Korrektur-Funktion; und eine Vorrichtung zum Trainieren des neuronalen Netzwerkes unter Verwendung des vierten Satzes der Testmuster, nachdem das neuronale Netzwerk trainiert wurde unter Verwendung des dritten Satzes der Testmuster, um Werte für die Mehrzahl der Gewichtungsfaktoren zu erzeugen, welche es dem neuronalen Netzwerk ermöglichen, die kombinierte Apertur- bzw. Öffnungs-Korrektur, Farb-Korrektur, Kontrast-Kompression und Gamma-Korrektur-Funktionen zu emulieren bzw. simulieren.

9. Signalverarbeitungssystem nach Anspruch 6, wobei die Videoinformationssignale rote, grüne, und blaue Farbsignale aufweisen.

10. Signalverarbeitungssystem nach Anspruch 6, wobei die Videoinformationssignale rote, grüne und blaue Farbsignale aufweisen und die ersten und zweiten nicht-linearen Signalverarbeitungsfunktionen werden aus einer Gruppe bestehend aus einer Gamma-Korrektur, einer Kontrast-Kompression, einem Farbabgleich bzw. -kompensation und einer Apertur- bzw. Öffnungskorrektur ausgewählt.

11. Verfahren zum Verarbeiten einer Mehrzahl von Eingabesignalen in Abhängigkeit von mindestens ersten und zweiten nicht-linearen Signalverarbeitungsfunktionen, um eine Mehrzahl von Ausgabesignalen zu erzeugen, in einem System, welches ein neuronales Netzwerk mit einer Mehrzahl von programmierbaren Gewichtungsfaktoren aufweist, wobei das Verfahren die Schritte aufweist:

Erzeugen einer ersten Mehrzahl von Testmustern, welche die erste nichtlineare Signalverarbeitungsfunktion darstellen, wobei jedes Muster in der ersten Mehrzahl der Testmuster einen Eingabevektor, einen Regel- bzw. Steuervektor und einen Ausgabevektor enthält, für die erste nicht-lineare Funktion;
Simulieren eines Ansprechverhaltens bzw. einer Antwort des neuronalen Netzwerks auf die erste Mehrzahl der Testmuster und Modifizieren bzw. Abändern der Gewichtungsfaktoren des neuronalen Netzwerkes, um die simulierte Antwort bzw. Ansprechverhalten des neuronalen Netzwerkes an die Ausgabevektoren, welche in der ersten Mehrzahl der Testmuster enthalten sind, anzupassen bzw. abzugleichen, um eine Mehrzahl von vorläufigen bzw. Zwischenwerten für die Gewichtungsfaktoren zu erzeugen;
Erzeugen einer zweiten Mehrzahl von Testmustern, welche eine Kombination der ersten und zweiten nicht-linearen Signalverarbeitungs-Funktionen darstellen, wobei jedes Muster der zweiten Mehrzahl der Testmuster einen Eingabevektor, einen Regel- bzw. Steuervektor und einen Ausgabevektor enthält;
Simulieren eines Ansprechverhaltens bzw. einer Antwort des neuronalen Netzwerks auf die zweite Mehrzahl der Testmuster und Modifizieren bzw. Abändern der Gewichtungsfaktoren des neuronalen Netzwerks, um das simulierte Ansprechverhalten bzw. Antwort des neuronalen Netzwerks an die Ausgabevektoren anzupassen bzw. abzugleichen, welche in der zweiten Mehrzahl der Testmuster enthalten sind, um eine Mehrzahl von Endwerten für die Gewichtungsfaktoren zu erzeugen;
Anlegen bzw. Anwenden der Endwerte der Gewichtungsfaktoren bei dem neuronalen Netzwerk; und
Verarbeiten der Eingabesignale unter Verwendung des neuronalen Netzwerkes, um die Ausgangssignale zu erzeugen.

**Revendications**

1. Système de traitement de signaux qui traite une pluralité de signaux d'entrée suivant au moins des première et deuxième fonctions non linéaires de traitement de signaux afin de produire une pluralité de signaux de sortie, le système comprenant :

un réseau neuronal (410, 420, 1210) comportant une pluralité de facteurs de pondération programmables (W$_{li}$); une pluralité de bornes d'entrée pour recevoir la pluralité de signaux d'entrée (R, G, B) et une pluralité de signaux de commande (GAMMA, CC); et une pluralité de bornes de sortie pour fournir la pluralité de signaux de sortie (R, G, B);

des moyens de simulation pour générer une pluralité de valeurs, chacune correspondant à un facteur respectif différent des facteurs de pondération, incluant :

des moyens pour simuler une réaction du réseau neuronal à une pluralité de modèles de test, chaque modèle contenant un vecteur d'entrée, un vecteur de commande et un vecteur de sortie; et

des moyens pour changer des valeurs simulées respectives attribuées aux facteurs de pondération afin de conformer la réaction simulée aux vecteurs de sortie des modèles de test;

des moyens pour générer une première pluralité de modèles de test, chacun contenant un vecteur d'entrée, un vecteur de commande et un vecteur de sortie désiré, pour la première fonction non linéaire et pour appliquer les modèles de test aux moyens de simulation afin de produire des valeurs préliminaires pour la pluralité de facteurs de pondération;

des moyens pour générer une deuxième pluralité de modèles de test représentant une combinaison des première et deuxième fonctions non linéaires de traitement de signaux, chaque modèle dans la deuxième pluralité de modèles de test contenant un vecteur d'entrée, un vecteur de commande et un vecteur de sortie désiré, et pour appliquer le deuxième jeu de modèles de test aux moyens de simulation afin de produire des valeurs finales pour la pluralité de facteurs de pondération; et

des moyens pour appliquer les valeurs finales des facteurs de pondération au réseau neuronal afin de permettre au réseau neuronal de traiter les signaux d'entrée conformément aux première et deuxième fonctions non linéaires de traitement de signaux.

2.  Système suivant la revendication 1, dans lequel les moyens de simulation comprennent :

un simulateur qui simule une réaction du réseau neuronal à chacun des vecteurs d'entrée et des vecteurs de commande des modèles de test afin de produire un vecteur de valeurs de sortie simulées;

des moyens pour calculer une pluralité de valeurs de fonction de coût, chaque valeur de fonction de coût représentant une fonction mathématique des valeurs de sortie simulées sélectionnées et des valeurs de sortie désirées correspondantes provenant du vecteur de sortie désiré;

des moyens de rétropropagation, réagissant aux valeurs de fonction de coût, pour modifier chacun des facteurs de pondération programmables afin de minimiser les différences entre les valeurs respectives dans chacun des vecteurs de sortie et les valeurs dans le vecteur de valeurs de sortie simulées; et

des moyens pour déterminer quand les facteurs de pondération ont convergé vers des valeurs qui permettent au réseau neuronal d'émuler la fonction de traitement de signaux avec une erreur acceptable.

3.  Système suivant la revendication 2, dans lequel chaque valeur de fonction de coût est une fonction de toutes les valeurs de sortie simulées du réseau neuronal.

4.  Système suivant la revendication 2, dans lequel le système est un système de traitement de signaux vidéo couleur qui produit au moins une première et une deuxième valeurs de signal de couleur comme première et deuxième valeurs de sortie respectives dans les vecteurs de sortie tant simulé que désiré, et la fonction de coût est une fonction d'une différence entre un rapport des première et deuxième valeurs de sortie simulées et un rapport des première et deuxième valeurs de sortie désirées.

5.  Système suivant la revendication 2, dans lequel le système est un système de traitement de signaux vidéo couleur qui produit au moins une première et une deuxième valeurs de signal de couleur comme première et deuxième valeurs respectives des valeurs de sortie tant simulée que désirée et la fonction de coût est une fonction d'une combinaison des première et deuxième valeurs de sortie simulées et des première et deuxième valeurs de sortie désirées qui représente une différence entre une première valeur de luminance produite par les valeurs de sortie simulées et une deuxième valeur de luminance produite par les valeurs de sortie désirées correspondantes.

6.  Système de traitement de signaux suivant la revendication 1, dans lequel les signaux d'entrée sont des signaux d'information vidéo, la première fonction non linéaire de traitement de signaux est une correction gamma et la deuxième fonction non linéaire de traitement de signaux est une compression de contraste.

7.  Système de traitement de signaux suivant la revendication 6, comprenant en outre des moyens pour générer un troisième jeu de modèles de test représentant des résultats de traitement des valeurs d'entrée à l'aide d'une fonction de correction de couleur en combinaison avec la fonction de correction gamma et la fonction de compression de contraste; et

des moyens pour entraîner le réseau neuronal utilisant le troisième jeu de modèles de test après que le réseau neuronal a été entraîné en utilisant le deuxième jeu de modèles de test afin de produire un jeu de valeurs pour la pluralité de facteurs de pondération afin d'émuler les fonctions combinées de correction de couleur, de compression de contraste et de correction gamma.

8.  Système de traitement de signaux suivant la revendication 7, comprenant des moyens pour générer un quatrième jeu de modèles de test représentant des résultats de traitement des valeurs d'entrée à l'aide d'une fonction de correction d'ouverture en combinaison avec la fonction de correction gamma, la fonction de compression de contraste et la fonction de correction de couleur; et

des moyens pour entraîner le réseau neuronal utilisant le quatrième jeu de modèles de test après que le réseau neuronal a été entraîné en utilisant le troisième jeu de modèles de test afin de produire des valeurs pour la pluralité de facteurs de pondération qui permettent au réseau neuronal d'émuler les fonctions combinées de correction d'ouverture, de correction de couleur, de compression de contraste et de correction gamma.

9.  Système de traitement de signaux suivant la revendication 6, dans lequel les signaux d'information vidéo comprennent des signaux de couleur rouge, vert et bleu.

10.  Système de traitement de signaux suivant la revendication 6, dans lequel les signaux d'information vidéo comprennent des signaux de couleur rouge, vert et bleu et les première et deuxième fonctions non linéaires de traitement de signaux sont sélectionnées parmi un groupe constitué de la correction gamma, de la compression de contraste, de la balance de couleurs et de la correction d'ouverture.

11.  Procédé de traitement d'une pluralité de signaux d'entrée suivant au moins des première et deuxième fonctions non linéaires de traitement de signaux afin de produire une pluralité de signaux de sortie, dans un système qui inclut un réseau neuronal possédant une pluralité de facteurs de pondération programmables, le procédé comprenant les étapes de :

générer une première pluralité de modèles de test, représentant la première fonction non linéaire de traitement de signaux, chaque modèle dans la première pluralité de modèles de test contenant un vecteur d'entrée, un vecteur de commande et un vecteur de sortie pour la première fonction non linéaire;

simuler une réaction du réseau neuronal à la première pluralité de modèles de test et modifier les facteurs de pondération du réseau neuronal afin de conformer la réaction simulée du réseau neuronal aux vecteurs de sortie contenus dans la première pluralité de modèles de test afin de générer une pluralité de valeurs préliminaires pour les facteurs de pondération;

générer une deuxième pluralité de modèles de test, représentant une combinaison des première et deuxième fonctions non linéaires de traitement de signaux, chaque modèle dans la deuxième pluralité de modèles de test comprenant un vecteur d'entrée, un vecteur de commande et un vecteur de sortie;

simuler une réaction du réseau neuronal à la deuxième pluralité de modèles de test et modifier les facteurs de pondération du réseau neuronal afin de conformer la réponse simulée du réseau neuronal aux vecteurs de sortie contenus dans la deuxième pluralité de modèles de test afin de générer une pluralité de valeurs finales pour les facteurs de pondération;

appliquer les valeurs finales des facteurs de pondération au réseau neuronal; et

traiter les signaux d'entrée en utilisant le réseau neuronal afin de produire les signaux de sortie.

VI
V2
V3

PROC
1
~110

PROC
2
~112

PROC
3
~114

VI'
V2'
V3'

PI          P2          P3

# FIG. 1

PRIOR ART

VI

V2

V3

PI

P2

P3

NEURAL
NETWORK
~210

VI'

V2'

V3'

# FIG. 2

**FIG. 3**
PRIOR ART

EP 0 618 737 B1

23

FIG. 4

FIG. 4a

**FIG. 5**

**FIG. 6**

**FIG. 7**

FIG. 6a

**FIG. 8**

FIG. 9

EP 0 618 737 B1

FIG. 10

**FIG. II**

INPUT

OUTPUT

F I G. 12

FIG. 13
PRIOR ART

1332 DAC

1324 APERTURE CORRECT

1320 GAMMA CORRECT

1319 HIGH PASS FILTER

1322 CONTRAST COMPRES

1318 COLOR BALANCE

1316 FIXED PATTERN CORRECTION

1314 VIDEO INPUT CKTS

1312 ADC

1310 RGB CCD'S

1334 PROCESSOR CONTROL & PROGRAMMING

1336 CONTROL PANEL

FIG. 14a

F I G. 14b

1508

1510a    1512a    1514a

r
g
b          →  r'
a
b          →  g'
l
r          →  b'

1510b    1512b    1514b

1510c    1512c    1514c

# F I G. 15a

4XI
4XI    + NL
4XI
4XI    + NL    3X3    NL NL NL    3X3    NL NL NL
4XI
4XI    + NL

# F I G. 15b

F I G. 16

F I G. 17

F I G. 18

F I G. 19a

F I G. 19b

F I G. 20a

F I G. 2Ob

F I G. 2Oc

DETERMINE CLOSEST
STORED PARAMETER
SETTING — 2108

↓

INITIALIZE
WEIGHTS — 2110

↓

GENERATE TRAINING
PATTERNS FOR $F_1$ — 2112

↓

TRAIN SYSTEM
USING GENERATED
PATTERNS — 2114

↓

EXAMINE HISTORY
OF OUTPUT ERRORS — 2116

↓

2118
Y ← ERRORS
ACCEPTABLE → N

2128
STORE WEIGHTING
FACTORS:
STORE NEW OUTPUT
ERROR VALUES WITH
OLD ERROR VALUES

2120
DIVERGING → N → CONVERGING SLOWLY → N
2124

↓ Y

REDUCE
CORRECTION FACTOR
2122

↓ Y

REORDER
PATTERNS
2126

2132
STORE FINAL
WEIGHTING
FUNCTIONS

# F I G. 21